(19) Europäisches Patentamt
European Patent Office
Office européen des brevets

(11) EP 4 787 451 A1

(12) **EUROPEAN PATENT APPLICATION**

(43) Date of publication:
**05.08.2026 Bulletin 2026/32**

(21) Application number: **26154296.3**

(22) Date of filing: **27.01.2026**

(51) International Patent Classification (IPC):
***H01M 4/131*** *(2010.01)* ***H01M 4/1391*** *(2010.01)*
***H01M 4/505*** *(2010.01)* ***H01M 4/62*** *(2006.01)*
***H01M 10/052*** *(2010.01)*

(52) Cooperative Patent Classification (CPC):
**H01M 4/131; H01M 4/1391; H01M 4/366; H01M 4/525; H01M 4/625; H01M 10/052**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **04.02.2025 KR 20250013727**

(71) Applicant: **SAMSUNG SDI CO., LTD.**
**Yongin-si, Gyeonggi-do 17084 (KR)**

(72) Inventors:
- **CHANG, Mise**
  **17084 Yongin-si, Gyeonggi-do (KR)**
- **JEONG, Hyejeong**
  **17084 Yongin-si, Gyeonggi-do (KR)**
- **KIM, Chaeyoung**
  **17084 Yongin-si, Gyeonggi-do (KR)**
- **LEE, Jungmin**
  **17084 Yongin-si, Gyeonggi-do (KR)**
- **PARK, JeongJoo**
  **17084 Yongin-si, Gyeonggi-do (KR)**
- **NAM, Hyun**
  **17084 Yongin-si, Gyeonggi-do (KR)**
- **LEE, Minho**
  **17084 Yongin-si, Gyeonggi-do (KR)**
- **PARK, Jin Seok**
  **17084 Yongin-si, Gyeonggi-do (KR)**

(74) Representative: **Bardehle Pagenberg Partnerschaft mbB**
**Patentanwälte Rechtsanwälte**
**Prinzregentenplatz 7**
**81675 München (DE)**

(54) **ELECTRODE, METHOD OF MANUFACTURING THE SAME, AND RECHARGEABLE LITHIUM BATTERY INCLUDING THE SAME**

(57) The present disclosure relates to an electrode for a rechargeable lithium battery, a rechargeable lithium battery including the electrode, and a method for producing the electrode. The electrode includes an electrode current collector, a first active material layer on the electrode current collector, and a second active material layer on the first active material layer. The first active material layer includes a first active material and a first composite conductive material. The second active material layer includes a second active material and a second composite conductive material. The first composite conductive material includes a first carbon nanostructure and a first polymer, the first polymer being chemically bonded to a surface of the first carbon nanostructure. The second composite conductive material includes a second carbon nanostructure and a second polymer, the second polymer chemically bonded to a surface of the second carbon nanostructure.

FIG. 6

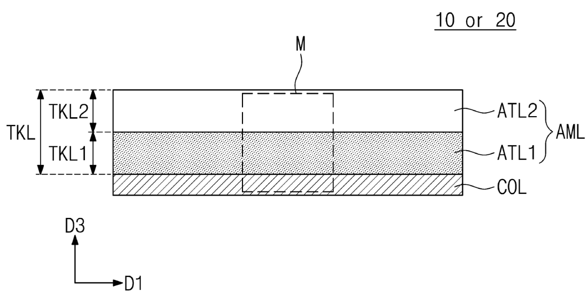


EP 4 787 451 A1

## Description

CROSS-REFERENCE TO RELATED APPLICATION

This application claims priority to Korean Patent Application No. 10-2025-0013727 filed on February 4, 2025 in the Korean Intellectual Property Office, the disclosure of which is hereby incorporated by reference in its entirety.

BACKGROUND

The present disclosure relates to an electrode for a rechargeable lithium battery, a rechargeable lithium battery including the electrode, and a method for producing an electrode for a rechargeable lithium battery, and more specifically, the present disclosure relates to applying a composite conductive material to an electrode having a multilayer active material layer structure.

With increasing presence of battery-powered electronic devices such as mobile phones, notebook computers, and electric vehicles, the demand for rechargeable batteries with high energy density and large capacity has been increasing. Accordingly, enhancing the performance of rechargeable lithium batteries may be advantageous.

A rechargeable lithium battery generally includes a positive electrode, a negative electrode, and an electrolyte. Both the positive and negative electrodes contain active materials capable of lithium-ion intercalation and deintercalation. Electrical energy is generated through oxidation and reduction reactions as lithium ions move between the electrodes during charging and discharging

SUMMARY

In accordance with the present invention, an electrode for a rechargeable lithium battery, a method of manufacturing an electrode for a rechargeable lithium battery, and a rechargeable lithium battery are provided.

An example embodiment of the present disclosure includes an electrode with improved capacity characteristics and life characteristics.

Another example embodiment of the present disclosure includes a rechargeable lithium battery including the electrode.

According to one or more example embodiments of the present disclosure, an electrode for a rechargeable lithium battery includes an electrode current collector, a first active material layer on the electrode current collector, and a second active material layer on the first active material layer. The first active material layer may include a first active material and a first composite conductive material. The second active material layer may include a second active material and a second composite conductive material. The first composite conductive material may include a first carbon nanostructure and a first polymer, the first polymer being chemically bonded to a surface of the first carbon nanostructure. The second composite conductive material may include a second carbon nanostructure and a second polymer, the second polymer chemically bonded to a surface of the second carbon nanostructure. The first polymer may be different from the second polymer. The ionic conductivity of the second polymer may be greater than the ionic conductivity of the first polymer.

According to one or more example embodiments of the present disclosure, a method of manufacturing an electrode for a rechargeable lithium battery includes providing an electrode current collector, forming a first active material layer on the electrode current collector, and forming a second active material layer on the first active material layer. The first active material layer may includes a first active material and a first composite conductive material. The second active material layer may include a second active material and a second composite conductive material. Manufacturing the first composite conductive material may include introducing a functional group onto a surface of the first carbon nanostructure, and mixing the functionalized first carbon nanostructure with a first polymer to prepare a first mixture. Manufacturing the second composite conductive material may include introducing a functional group onto a surface of the second carbon nanostructure, and mixing the functionalized second carbon nanostructure with a second polymer to prepare a second mixture. The first polymer may be different from the second polymer, and the ionic conductivity of the second polymer may be greater than the ionic conductivity of the first polymer.

According to one or more example embodiments of the present disclosure, a rechargeable lithium battery includes a positive electrode, a negative electrode, a separator interposed between the positive electrode and the negative electrode, and an electrolyte. At least one of the positive electrode and the negative electrode includes the electrode as described above.

BRIEF DESCRIPTION OF DRAWINGS

FIG. 1 illustrates a simplified conceptual diagram showing a rechargeable lithium battery according to an example embodiment of the present disclosure.

FIGS. 2 to 5 illustrate simplified diagrams showing a rechargeable lithium battery according to an example embodiment of the present disclosure, with FIG. 2 showing a cylindrical battery, FIG. 3 showing a prismatic battery, and FIGS. 4 and 5 showing pouch-type batteries.

FIG. 6 illustrates a cross-sectional view showing an electrode for a rechargeable lithium battery according to example embodiments of the present disclosure.

FIG. 7 illustrates an enlarged view showing an electrode according to example embodiments of the present disclosure.

FIGS. 8A to 8C illustrate enlarged views for explaining an electrode according to comparative examples of the present disclosure.

FIG. 9 illustrates a cross-sectional view of an electrode according to other example embodiments of the disclosure.

FIG. 10 illustrates an enlarged view for illustrating an electrode according to other example embodiment of the present disclosure.

FIG. 11 illustrates a diagram for describing a method of manufacturing an electrode according to an example embodiment of the present disclosure.

FIG. 12A illustrates a schematic diagram showing a manufacturing process of composite conductive materials according to an example embodiment of the present disclosure.

FIG. 12B illustrates an enlarged view showing composite conductive materials according to an example embodiment of the present disclosure.

FIG. 13 illustrates an SEM image of composite conductive materials according to an example embodiment of the present disclosure.

FIG. 14 is a flowchart illustrating a method of manufacturing an electrode for a rechargeable lithium battery, according to an example embodiment.

## DETAILED DESCRIPTION OF EMBODIMENTS

To fully understand the configuration and effects of the present disclosure, some example embodiments are described with reference to the accompanying drawings. However, the present disclosure is not limited to the following example embodiments and may be implemented in various forms. The example embodiments are provided solely to illustrate the present disclosure and to enable those skilled in the art to fully understand its scope.

In this description, when an element is described as being "on" another element, the element may be directly on the other element, or one or more intervening elements may be present therebetween. In the drawings, certain thicknesses may be exaggerated to better illustrate technical details. Throughout the specification, like reference numerals indicate like elements.

The example embodiments described herein may be illustrated using sectional and/or plan views, which are presented as idealized examples of the present disclosure. The thicknesses of layers and regions in the drawings may be exaggerated for clarity. The regions shown in the drawings are for illustrative purposes and should not be construed as limiting the scope of the present disclosure. Although terms such as "first," "second," and "third" may describe various elements, these terms are merely for distinction and do not imply any particular order or hierarchy. The example embodiments described and illustrated herein include complementary variations.

The terms used in this description serve only to explain various example embodiments and are not intended to limit the present disclosure. Unless explicitly stated otherwise, singular forms may also include plural forms. The terms "comprises/includes" and "comprising/including" do not exclude the presence or addition of one or more other components.

In this description, the phrase "combination thereof" may refer to a mixture, a stack, a composite, a copolymer, an alloy, a blend, or a reaction product.

Unless otherwise specifically defined, the term "particle diameter" refers to an average particle diameter. The particle diameter may represent the median particle size (D50), which corresponds to the diameter of particles at 50 vol% in a cumulative particle size distribution. The average particle diameter (D50) can be measured using widely known methods, such as a particle size analyzer, transmission electron microscope (TEM) imaging, or scanning electron microscope (SEM) imaging. Alternatively, dynamic light scattering may be used, where particle counts within size ranges are analyzed to calculate the average particle diameter (D50). Additionally, a laser scattering method may be employed, in which a target particle is dispersed in a solvent, introduced into a laser scattering particle measurement device (e.g., MT3000 from Microtrac, Inc.), irradiated with ultrasonic waves at 28 kHz and 60 W, and subsequently analyzed to determine the D50 value based on a 50% cumulative particle size distribution.

In this description, unless otherwise separately defined, the term "alkyl group" may refer to a C1 to C20 alkyl group, the term "alkenyl group" may refer to a C2 to C20 alkenyl group, the term "cycloalkenyl group" may refer to a C3 to

C20 cycloalkenyl group, and the term "heterocycloalkenyl group" may refer to a C3 to C20 heterocycloalkenyl group, the term "aryl group" may refer to a C6 to C20 aryl group, the term "arylalkyl group" may refer to a C6 to C20 arylalkyl group, the term "alkylene group" may refer to a C1 to C20 alkylene group, the term "arylene group" may refer to a C6 to C20 arylene group, the term "alkylarylene group" may refer to a C6 to C20 alkylarylene group, the term "heteroarylene group" may refer to a C3 to C20 heteroarylene group, and the term "alkoxylene group" may refer to a C1 to C20 alkoxylene group.

In this description, unless otherwise separately defined, the term "substituted" may refer to at least one hydrogen atom being substituted with a substituent of a halogen atom (F, Cl, Br, I), a hydroxy group, a C1 to C20 alkoxy group, a nitro group, a cyano group, an amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C20 aryl group, a C3 to C20 cycloalkyl group, a C3 to C20 cycloalkenyl group, C3 to C20 cycloalkynyl group, C2 to C20 heterocycloalkyl group, C2 to C20 heterocycloalkenyl group, C2 to C20 heterocycloalkynyl group, C3 to C20 heteroaryl group, or a combination thereof.

Also, in this description, unless otherwise separately defined, the term "hetero" means that the chemical formula includes at least one heteroatom such as or including at least one of N, O, S, and P.

Also, in this description, unless otherwise separately defined, the term "(meth)acrylate" may refer to both "acrylate" and "methacrylate," and "(meth)acrylic acid" may refer to both "acrylic acid" and "methacrylic acid".

In this description, unless otherwise separately defined, the term "combination" may refer to mixing or copolymerization.

In this description, unless otherwise separately defined, the term "*" refers to a moiety that is connected to the same or different atom or chemical formula.

When the terms "about" or "substantially" are used in this specification in connection with a numerical value, it is intended that the associated numerical value include a tolerance of $\pm$10% around the stated numerical value. When ranges are specified, the range includes all values therebetween such as increments of 0.1%.

FIG. 1 is a cross-sectional view of a rechargeable lithium battery according to example embodiments of the present invention. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be disposed between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be impregnated in the electrolyte solution ELL.

The electrolyte solution ELL may be or include a medium for transferring lithium ions between the positive electrode 10 and the negative electrode 20. In the electrolyte solution ELL, the lithium ions may move through the separator 30 toward the positive electrode 10 or the negative electrode 20.

Positive Electrode 10

The positive electrode 10 for a rechargeable lithium battery may include a current collector COL1, and a positive electrode active material layer AML1 on the current collector COL1. The positive electrode active material layer AML1 may include a positive electrode active material, and may further include a binder and/or a conductive material (e.g., an electrically conductive material).

For example, the positive electrode 10 may further include an additive that can constitute a sacrificial positive electrode.

An amount of the positive electrode active material may be in a range of about 90 wt% to about 99.5 wt% based on the total weight of the positive electrode active material layer AML1. Amounts of the binder and the conductive material may be in a range of about 0.5 wt% to about 5 wt%, respectively, based on the total weight of the positive electrode active material layer AML1.

The binder attaches the positive electrode active material particles to each other, and attaches the positive electrode active material to the current collector COL1. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may impart conductivity (e.g., electrical conductivity) to the electrode. Any material that does not cause chemical change (e.g., does not cause an undesirable chemical change in the rechargeable lithium battery) and that conducts electrons can be used in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material containing at least one of copper, nickel,

aluminum, silver, and the like, in a form of a metal powder or a metal fiber; a conductive polymer such as a polyphenylene derivative; or a mixture thereof.

Al may be used as the current collector COL1, but is not limited thereto.

Positive Electrode Active Material

The positive electrode active material may include a compound (lithiated intercalation compound) that is capable of intercalating and deintercalating lithium. For example, at least one of a composite oxide of lithium and a metal such as or including at least one of cobalt, manganese, nickel, and combinations thereof may be used.

The composite oxide may be or include a lithium transition metal composite oxide. Examples of the composite oxide may include at least one of a lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. $Li_aA_{1-b}X_bO_{2-c}D_c$ ($0.90 \leq a \leq 1.8$, $0 \leq b \leq 0.5$, and $0 \leq c \leq 0.05$); $Li_aMn_{2-b}X_bO_{4-c}D_c$ ($0.90 \leq a \leq 1.8$, $0 \leq b \leq 0.5$, and $0 \leq c \leq 0.05$); $Li_aNi_{1-b-c}Co_3X_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_bCo_cL^1{}_dG_eO_2$ ($0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ ($0.90 \leq a \leq 1.8$ and $0.001 \leq b \leq 0.1$); $Li_aCoG_bO_2$ ($0.90 \leq a \leq 1.8$ and $0.001 \leq b \leq 0.1$); $Li_aMn_{1-b}G_bO_2$ ($0.90 \leq a \leq 1.8$ and $0.001 \leq b \leq 0.1$); $Li_aMn_2G_bO_4$ ($0.90 \leq a \leq 1.8$ and $0.001 \leq b \leq 0.1$); $Li_aMn_{1-g}G_gPO_4$ ($0.90 \leq a \leq 1.8$ and $0 \leq g \leq 0.5$); $Li_{(3-f)}Fe_2(PO_4)_3$ ($0 \leq f \leq 2$); or $Li_aFePO_4$ ($0.90 \leq a \leq 1.8$).

In the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.

The positive electrode active material may be or include, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

Negative Electrode 20

The negative electrode 20 for a rechargeable lithium battery may include a current collector COL2, and a negative electrode active material layer AML2 on the current collector COL2. The negative electrode active material layer AML2 may include a negative electrode active material, and may further include a binder and/or a conductive material (e.g., an electrically conductive material).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may attach the negative electrode active material particles to each other, and attach the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any material that

does not cause chemical change (e.g., does not cause an undesirable chemical change in the rechargeable lithium battery) and that conducts electrons can be used in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in a form of a metal powder or a metal fiber; a conductive polymer such as a polyphenylene derivative; or a mixture thereof.

The negative current collector COL2 may include at least one of a copper foil, a nickel foil, a stainless-steel foil, a titanium foil, a nickel foam, a copper foam, a polymer substrate coated with a conductive metal, or a combination thereof.

Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx ($0 < x \leq 2$), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be or include a composite of silicon and amorphous carbon. According to an example embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

Separator 30

Depending on the type of the rechargeable lithium battery, the separator 30 may be present between the positive electrode 10 and the negative electrode 20. The separator 30 may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof on one surface, or on both surfaces, of the porous substrate.

The porous substrate may be or include a polymer film formed of or including any one or more of polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof,

but is not limited thereto.

The organic material and the inorganic material may be mixed in one coating layer, or a coating layer including an organic material and a coating layer including an inorganic material may be stacked together.

Electrolyte Solution ELL

The electrolyte solution ELL for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone or in combination of two or more solvents.

In addition, when using a carbonate-based solvent, a cyclic carbonate and a chain carbonate may be mixed, and the cyclic carbonate and the chain carbonate may be mixed in a volume ratio in a range of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluoro(oxalato)borate(LiDFOB), lithium difluorobis(oxalato)phosphate (LiDFBOP), and lithium bis(oxalato) borate (LiBOB).

Rechargeable Lithium Battery

The rechargeable lithium battery may be classified into cylindrical, prismatic, pouch, or coin-type batteries, and the like depending on their shape. FIGS. 2 to 5 are schematic views illustrating a rechargeable lithium battery according to an example embodiment. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70 illustrated in FIG. 5, or, for example, a positive electrode tab 71 and a negative electrode tab 72 illustrated in FIG. 4, the electrode tabs 70/71/72 forming an electrical path for inducing the current formed in the electrode assembly 40 to the outside.

According to an example embodiment of the present disclosure, a rechargeable lithium battery including an electrode, a separator, and an electrolyte is provided. For example, a rechargeable lithium battery according to one example embodiment may include a positive electrode including a positive electrode active material, a negative electrode including a negative electrode active material, a separator interposed between the positive electrode and the negative electrode, and an electrolyte.

At least one of the positive electrode and the negative electrode may be an electrode to be described below. Hereinafter, a more detailed description of the electrodes according to example embodiments of the present disclosure is provided.

**Electrode for Rechargeable lithium battery**

FIG. 6 illustrates a cross-sectional view of an electrode for a rechargeable lithium battery according to one example embodiment of the present disclosure.

Referring to FIG. 6, the electrodes 10 and 20 may include an electrode current collector COL and an active material layer AML positioned on the electrode current collector COL.

For example, as the electrode current collector COL, any one or more of an aluminum foil, a copper foil, a nickel foil, a stainless-steel foil, a titanium foil, a nickel foam, a copper foam, a polymer substrate coated with a conductive metal, or a combination thereof may be used.

The active material layer AML may include a first active material layer ATL1 disposed on the electrode current collector COL, and a second active material layer ATL2 disposed on the first active material layer ATL1.

The first active material layer ATL1 may have a thickness TKL1, and the second active material layer ATL2 may have a thickness of TKL2.

The thickness TKL of the active material layer AML may be the sum of the thickness TKL1 of the first active material layer ATL1 and the thickness TKL2 of the second active material layer ATL2.

The thickness TKL of the active material layer AML may be in a range of about 10 μm to about 170 μm. For example, the thickness TKL of the active material layer AML may be 10 μm or more, 11 μm or more, 15 μm or more, 20 μm or more, 30 μm or more, or 40 μm or more. For example, the thickness TKL of the active material layer AML may be 170 μm or less, 160 μm or less, 150 μm or less, 140 μm or less, 130 μm or less, 120 μm or less, 110 μm or less, 100 μm or less, 90 μm or less, 80 μm or less, 70 μm or less, 60 μm or less, 50 μm or less. When the thickness TKL of the active material layer AML falls within the above-described range, the volume change of the battery during charging and/or discharging can be reduced or minimized, and it is possible to provide a battery with a long lifetime.

The thickness TKL1 of the first active material layer ATL1 may be in a range of about 10 μm to about 120 μm. For example, the thickness TKL1 of the first active material layer ATL1 may be 15 μm or more, 20 μm or more, 30 μm or more, or 40 μm or more. For example, the thickness TKL1 of the first active material layer ATL1 may be 90 μm or less, 80 μm or less, 70 μm or less, 60 μm or less, 50 μm or less, or 40 μm or less.

The thickness TKL2 of the second active material layer ATL2 may be in a range of about 10 μm to about 120 μm. For example, the thickness TKL2 of the second active material layer ATL2 may be 15 μm or more, 20 μm or more, 30 μm or more, or 40 μm or more. For example, the thickness TKL2 of the second active material layer ATL2 may be 90 μm or less, 80 μm or less, 70 μm or less, 60 μm or less, 50 μm or less, or 40 μm or less.

When the thickness TKL1 of the first active material layer ATL1 and the thickness TKL2 of the second active material layer ATL2 fall within the above-described ranges, a change in the volume of the battery during charging and/or discharging can be reduced or minimized, and it is possible to provide a battery having a long lifetime.

In an example embodiment, the thickness TKL1 may increase as the weight of the active material included in the first active material layer ATL1 increases. In an example embodiment, the thickness TKL2 may increase as the weight of the active material included in the second active material layer ATL2 increases.

The thickness ratio (TKL1:TKL2) of the first active material layer ATL1 to the second active material layer ATL2 may be in a range of about 3:7 to about 7:3. According to an example embodiment, the thickness ratio (TKL1:TKL2) of the first active material layer ATL1 to the second active material layer ATL2 may be 5:5. When the thickness ratio (TKL1:TKL2) of the first active material layer ATL1 to the second active material layer ATL2 falls within the above-described numerical range, the adhesion of the active material layer AML to the electrode current collector COL can be improved, thereby improving or maximizing the capacity and energy density of the battery while also enhancing the ease of the electrode plate processing.

FIG. 7 illustrates an enlarged view showing an electrode according to example embodiments of the present disclosure. That is, FIG. 7 illustrates an enlarged view of the "M" region in FIG. 6.

Referring to FIG. 7, the first active material layer ATL1 may include a first active material CAM1 and a first composite conductive material CCM1.

As an example, the amount of the first active material CAM1 may be in a range of about 90 wt% to about 99.5 wt% based on the total weight of the first active material layer ATL1. When the first active material layer ATL1 falls within the above range amount of the first active material CAM1, the capacity and the energy density of the battery can be improved or maximized.

When the electrode for a rechargeable lithium battery according to one example embodiment of the present disclosure is a positive electrode, a compound capable of reversible intercalation and deintercalation of lithium (a lithiated intercalation compound) may be used as the first active material CAM1. The first active material CAM1 may include a lithium composite oxide represented by the following chemical formula 3.

chemical formula 3: $Li_{x4}M^1_yM^2_zM^3_{1-y-z}O_{2-a}Xa$

wherein, in chemical formula 3,

$$0.5\leq x4\leq 1.8,\ 0\leq a\leq 0.05,\ 0<y\leq 1,\ 0\leq z\leq 1,\ \text{and}\ 0\leq y+z\leq 1,$$

$M^1$, $M^2$ and $M^3$ may each independently be or include at least one of Ni, Co, Mn, Al, B, Ba, Ca, Ce, Cr, Fe, Mo, Nb, Si, Sr, Mg, Ti, V, W, Zr, La, or a combinations thereof,
X may include one or more elements such as or including at least one of F, S, P, or Cl.

In an example embodiment, in the above chemical formula 3, $M^1$ may be or include Ni, and y may satisfy $0.8\leq y\leq 1$, and z may satisfy $0\leq z\leq 0.2$. For example, the first active material CAM1 may include at least one of LMFP ($LiFePO_4$, lithium manganese iron phosphate), NMX (nickel manganese oxide, $NiMnO_2$), NCA ($LiNiCoAlO_2$, lithium nickel cobalt aluminum), NCM ($LiNiCoMnO_2$, lithium nickel cobalt manganese), or a combination thereof.

When the electrode for a rechargeable lithium battery according to an example embodiment of the present disclosure is a negative electrode, the first active material (CAM1) may be used without limitation as long as the first active material is suitable for use as a negative electrode active material of a rechargeable lithium battery.

As the first active material layer ATL1 includes the first composite conductive material CCM1, in which the first polymer containing a functional group with desired or improved adhesiveness is integrated with the first carbon nanostructure, thereby improving adhesiveness while also securing a flow path of lithium ions in the first active material layers ATL1. Therefore, the ionic conductivity thereof can be superior to the ionic conductivity of an active material layer AML including a conventional binder.

The first composite conductive material CCM1 may include a first carbon nanostructure and a first polymer chemically bonded to a surface of the first carbon nanostructure. Herein, the chemical bond refers to bonding through ionic or covalent bonding.

By forming a chemical bond between the first carbon nanostructure and the first polymer within the first composite conductive material CCM1, the first carbon nanostructure can be dispersed in the first active material layer ATL1 without agglomeration. The first composite conductive material CCM1 may improve dispersibility and form a conductive path even in a small amount. The first composite conductive material CCM1 may increase the adhesion between the first active material layer ATL1 and the electrode current collector COL by containing the first polymer with desired or improved adhesiveness. The first composite conductive material CCM1 may not cause a phenomenon such as agglomeration, which occurs due to the movement of the first carbon nanostructure, even during the expansion and contraction of the active material caused by charging and/or discharging.

The first carbon nanostructure may include a carbon material having a chain form or an elongated form, which exhibits desired or improved mechanical strength, thermal conductivity, and chemical stability, as well as electrical conductivity.

The first carbon nanostructure may be produced by a conventional manufacturing method. For example, the first carbon nanostructure may be manufactured by an arc discharge method, laser ablation, chemical vapor deposition, high pressure carbon monoxide separation (HIPCO), or the like.

The size of the first carbon nanostructures may have a diameter in nanometer range and a length in micrometer range. For example, the size of the first carbon nanostructure can be from about 1 nm to about 100 nm, from 20 nm to 80 nm, or from 30 nm to 70 nm in diameter and from 10 $\mu$m to 100 $\mu$m, from 15 $\mu$m to 90 $\mu$m, from 20 $\mu$m to 80 $\mu$m, or from 30 $\mu$m to 70 $\mu$m in length.

As an example, the first carbon nanostructure may include at least one of carbon nanotubes (CNT), carbon nanofibers (CNFs), polyacetylene, graphene nanoribbons (GNRs), graphene sheets, fullerenes, nanodiamonds, mesoporous carbon, amorphous carbon, carbon quantum dots, nanoporous carbon, carbon black, nanohorns, or vitreous carbon. According to an example embodiment, the first carbon nanostructure may include carbon nanotubes (CNTs). The carbon nanotubes (CNTs) may include a single-wall (SWCNTs) structure or a multi-wall (MWCNTs) structure.

The first polymer may be or include an organic binder soluble in an organic solvent. The organic binder has an advantage of being able to exhibit various properties such as adhesiveness, tensile strength, and elasticity. The first polymer can be used without limitation as long as the first polymer is capable of realizing an organic binder.

The first polymer may include an adhesive polymer. The molecular weight of the adhesive polymer has no restriction on molecular weight; however, the adhesive polymer may have functional groups such as a hydroxyl group, a carboxyl group, or an amine group, and may be compatible with the active material and other additives included in the composition of the electrodes 10 and 20, so that there are no issues in slurry preparation. In addition, the adhesive polymer may have electrochemically stable properties during the charging and/or discharging process of the lithium battery.

The first polymer includes a functional group with high adhesiveness, and may have properties that are different from the properties of the second polymer, which are described below.

For example, the first polymer may have a different ionic conductivity from the second polymer to be described below. The ionic conductivity of the first polymer may be lower than the ionic conductivity of the second polymer. According to an example embodiment, the ionic conductivity value of the first polymer may be in a range of about $10^{-4}$ S/cm to about $10^{-3}$ S/cm.

The first polymer may have a different glass transition temperature (Tg) from the glass transition temperature of the second polymer to be described below. The glass transition temperature (Tg) of the first polymer may be lower than the glass transition temperature of the second polymer.

The glass transition temperature (Tg) refers to a temperature at which a polymer transitions from a glassy state to a rubbery state, and is one of important physical properties that affect the hardness and flexibility of the polymer. For example, the glass transition temperature (Tg) of the second polymer, which is described below, may be higher than the glass transition temperature of the first polymer. The glass transition temperature (Tg) may be measured by detecting changes in heat flow using DSC (differential scanning calorimetry) or by analyzing weight changes as a function of temperature using TGA (thermogravimetric analysis).

The first polymer may have flexible properties even at low temperatures due to the high adhesiveness thereof. Therefore, the first polymer may have a relatively lower glass transition temperature (Tg) compared to the second polymer.

According to an example embodiment, the glass transition temperature (Tg) value of the first polymer may be in a range of about 10° C to about 40° C. According to an example embodiment, the glass transition temperature (Tg) value of the second polymer may be 40° C to 100° C.

The first polymer may include at least one of polyvinylalcohol (PVA), polyacrylonitrile (PAN), polyacrylic acid (PAA), polyethylene (PE), polyethylene glycol (PEG), polyimide (PI), polyacrylamide (PAM) polystyrene (PS), polyurethane (PU), polyvinylbutyral (PVB), polyvinylpyrrolidone (PVP), or a combination thereof. That is, the first polymer may be used singly or in combination with two or more thereof.

According to an example embodiment, the first polymer may include at least one of a first structural unit represented by the following chemical formula 1-1, or a second structural unit represented by the following chemical formula 1-2.

chemical formula 1-1:

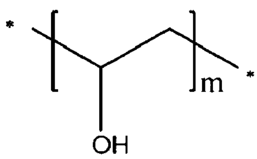

,

chemical formula 1-2:

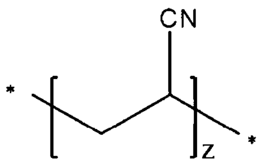

.

In chemical formulae 1-1 and 1-2, m and z may be each independently an integer from 1 to 100.

For example, the first structural unit may be derived from polyvinyl alcohol (PVA). For example, the second structural unit may be derived from polyacrylonitrile (PAN).

According to an example embodiment, the first polymer may include at least one of a polyvinyl alcohol-polyacrylonitrile (PVA-PAN) copolymer, a polyvinylalcohol-polyethylene glycol (PVA-PEG) copolymer, or a polyacrylic acid-polyacrylonitrile (PAA-PAN) copolymer.

The first polymer may be included in a weight ratio in a range of about 40 wt% to about 80 wt% based on the total weight of the first composite conductive material CCM1. When the amount of the first polymer in the first composite conductive material CCM1 exceeds the above-described range, the internal resistance of the electrode may increase due to a side reaction. When the amount of the first polymer in the first composite conductive material CCM1 falls below the above-described range, a trace amount of the first polymer may not be evenly distributed.

According to an example embodiment, the amount of the first composite conductive material CCM1 may be in a range of about 0.1 wt% to about 5 wt% based on the total weight of the first active material layer ATL1. When the amount of the first composite conductive material CCM1 in the first active material layer ATL1 exceeds the above-described range,

the resistance of the electrode may increase, leading to a decrease in the stability and performance of the battery. When the first composite conductive material CCM1 is not included in the first active material layer ATL1, or when the amount of the first composite conductive materials CCM1 in the first active material layer ATL1 is less than the above-described range, it may be challenging to improve or maximize the effect of improved adhesiveness.

The second active material layer ATL2 may include a second active material CAM2 and a second composite conductive material CCM2.

The second active material CAM2 included in the second active material layer ATL2 may be the same as the first active material CAM1 included in the first active material layer ATL1 and described above.

As an example, the amount of the second active material (CAM2) may be in a range of about 90 wt% to about 99.5 wt% based on the total weight of the second active material layer (ATL2). When the second active material layer ATL2 falls within the amount range condition of the second active material CAM2, the capacity and the energy density of the battery can be improved or maximized.

The second composite conductive material CCM2 can secure a flow path for lithium ions without binder migration occurring on the surface of the active material layer AML. The second composite conductive material CCM2 may include a second polymer containing a functional group effective for lithium ion transport, thereby exhibiting desired or improved ion conductivity.

The second composite conductive material CCM2 may include a second carbon nanostructure and a second polymer chemically bonded to a surface of the second carbon nanostructure. Herein, the chemical bond refers to bonding through ionic or covalent bonding.

By forming a chemical bond between the second carbon nanostructure and the second polymer within the second composite conductive material CCM2, the second carbon nanostructure can be dispersed in the second active material layer ATL2 without agglomeration. The second composite conductive material CCM2 may improve dispersibility, and form a conductive path even with a small amount. The second composite conductive material CCM2 may include a second polymer with desired or improved ionic conductivity, thereby enhancing ionic conductivity in the second active material layer ATL2. The second composite conductive material CCM2 may not cause a phenomenon such as agglomeration, which occurs due to the movement of the second carbon nanostructure, even during the expansion and contraction of the active material caused by charging and/or discharging.

The second carbon nanostructure can be the same as the first carbon nanostructure described earlier in the first active material layer ATL1. In one example, the second carbon nanostructures may include carbon nanotubes (CNTs). Carbon nanotubes (CNTs) may include single-wall (SWCNTs) structures, or multi-wall (MWCNTs) structures.

The second polymer may have different properties from the first polymer described above.

For example, the second polymer may have a different ionic conductivity from the first polymer described above. The ion conductivity of the second polymer may be greater than the ion conductivity of the first polymer described above. According to an example embodiment, the ionic conductivity value of the second polymer may be in a range of about $10^{-2}$ S/cm to about $10^{-3}$ S/cm.

The second polymer is a mixed polymer containing a functional group with desired or improved ionicity, exhibiting stable flexibility at high temperatures while simultaneously possessing high ionic conductivity.

In one example, the second polymer may have a weight-average molecular weight (Mw) from 20,000 g/mol to 2,500,000 g/mol, or from 50,000 g/mol to 1,500,000 g/mol.

Herein, the "weight-average molecular weight" may be a value calculated as a molecular weight value by gel filtration chromatography.

The second polymer may include an ionic polymer. The molecular weight of the ionic polymer has no restriction on molecular weight; however, the ionic polymer should have functional groups such as a hydroxyl group, a carboxyl group, or an amine group, be compatible with the second active material (CAM2) and other additives included in the composition of the electrodes 10 and 20, so that there is no issues in slurry preparation. In addition, the ionic polymer may have electrochemically stable properties during the charging and/or discharging process of the lithium battery.

According to an example embodiment, the second polymer may include at least one of a third structural unit represented by chemical formula 2-1A or 2-1B; a fourth structural unit represented by chemical formula 2-2; a fifth structural unit represented by chemical formula 2-3A or 2-3B; or a sixth structural unit represented by chemical formula 2-4A or 2-4B.

The third structural unit represented by chemical formula 2-1A or 2-1B may be derived from a (meth)acrylic acid-based monomer or a salt thereof.

chemical formula 2-1A:

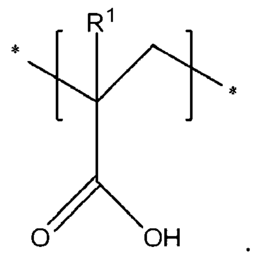

chemical formula 2-1B:

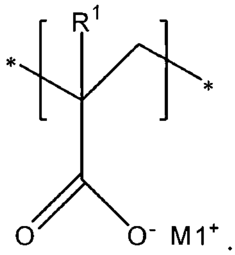

In chemical formulae 2-1A and 2-1B, the radicals $R^1$ are the same or different, and each independently are or include a hydrogen atom or a C1 to C20 alkyl group, and M1 may be or include an alkali metal.

For example, the third structural unit may be derived from acrylic acid, and all the radicals $R^1$ may be hydrogen atoms.

M1 may be derived from a metal ion in the electrolyte and may be or include, for example, a lithium atom.

The fourth structural unit represented by the following chemical formula 2-2 may be derived from a (meth) acrylonitrile-based monomer,

chemical formula 2-2:

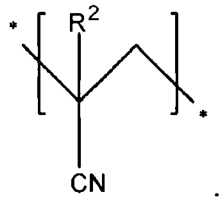

In chemical formula 2-2, $R^2$ may be or include a hydrogen atom or a C1 to C20 alkyl group.

The fourth structural unit may be derived from acrylonitrile. In this case, $R^2$ may be or include a hydrogen atom.

The fifth structural unit represented by the following chemical formula 2-3A or 2-3B may be derived from a zwitterionic monomer.

chemical formula 2-3A:

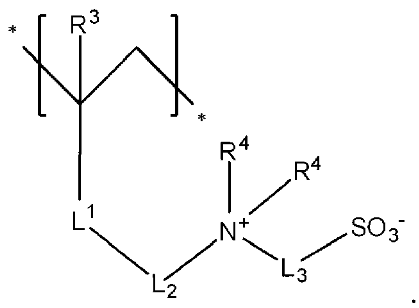

chemical formula 2-3B:

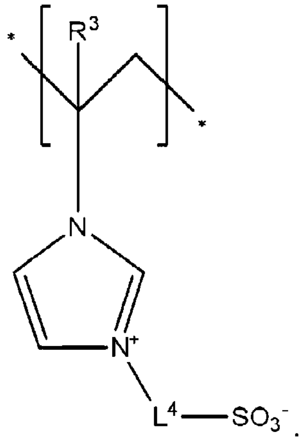

In chemical formulae 2-3A and 2-3B, the radicals $R^3$ are the same or different, and each independently are or include a hydrogen atom or a C1 to C20 alkyl group.

$R^4$ may be the same or different, and each independently are or include a hydrogen atom, or a C1 to C20 alkyl group; $L^1$ may be *- (C=O)-NR$^4$ - $CH_2$ -* or *-(C=O) - O - *; and $L^2$ to $L^4$ are each independently a single bond, or a C1-C20 alkylene group.

When the fifth structural unit is derived from sulfobetaine (SB) and is represented by the chemical formula 2-3A, $R^3$ and $R^4$ may be or include a methyl group; $L^1$ may be or include *- (C=O)-NR$^4$ - $CH_2$ -* or *- (C=O) - O - *; and both $L^2$ and $L^3$ may be or include an ethylene group.

When the fifth structural unit is derived from vinylimidazolium sulfonate (IMS) and is represented by the chemical formula 2-3B, $R^3$ may be or include a hydrogen atom; and $L^4$ may be or include a butylene group.

The sixth structural unit represented by chemical formula 2-4A or 2-4B may be derived from an alkylene glycol-based monomer or a salt thereof.

chemical formula 2-4A:

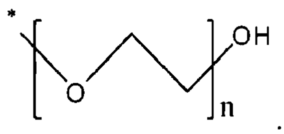

chemical formula 2-4B:

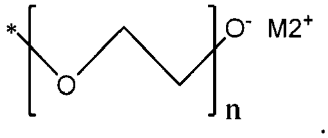

In chemical formulae 2-4A and 2-4B, M2 is or includes an alkali metal, and n may be an integer from 1 to 100.

For example, the sixth structural unit may be derived from ethylene glycol. In this case, n may be 5 to 20, or 5 to 10.

M2 may be derived from a metal ion in the electrolyte and may be, for example, a lithium atom.

When the second polymer includes the third structural unit to the fifth structural unit, the third structural unit may be included in an amount in a range of about 30 wt% to about 60 wt %, 45 to 60 wt %, or 45 to 60 wt%; the fourth structural unit may be included in an amount of 32 to 55 wt %, 35 to 55 wt %, or 35 to 50 wt %; and the fifth structural unit may be included in an amount in a range of about 1 wt% to 15 wt %, 3 to 15 wt %, or 5 to 15 wt % based on the total weight of the second polymer. Within these ranges, the third to fifth structural units are harmonized to provide high adhesiveness while also exhibiting desired or improved ionic conductivity and low resistance.

When the second polymer includes the third structural unit to the sixth structural unit, the third structural unit may be included in an amount in a range of about 30 wt% to about 60 wt %, or 45 to 60 wt %; the fourth structural unit may be included in an amount of 32 to 55 wt %, 35 to 55 wt %, or 35 to 50 wt %; the fifth structural unit may be included in an amount

of 1 to 15 wt %, 3 to 15 wt % or 5 to 15 wt %; and the sixth structural unit may be included in an amount of 0.1 to 15 wt%, 1 to 15 wt%, or 3 to 10 wt %, based on the total weight of the total amount of the second polymer. In this case, the sixth structural unit can contribute to further reducing the resistance by increasing the ionic conductivity of the second polymer.

The second polymer may be included in a weight ratio in a range of about 40 wt% to about 80 wt% based on the total weight of the second composite conductive material CCM2. When the amount of the second polymer in the second composite conductive material CCM2 exceeds the above-described range, the internal resistance of the electrode may increase due to side reactions. When the amount of the second polymer in the second composite conductive material CCM2 falls below the above-described range, a trace amount of the second polymer may not be evenly distributed.

According to an example embodiment, the amount of the second composite conductive material CCM2 may be in a range of about 0.1 wt% to about 5 wt% based on the total weight of the second active material layer ATL2. When the amount of the second composite conductive material CCM2 in the second active material layer ATL2 exceeds the above-described range, the resistance of the electrode increases, leading to a decrease in the stability and performance of the battery. When the second composite conductive material CCM2 is not included in the second active material layer ATL2, or when the amount of the second composite conductive materials CCM2 in the electrode second active material layer ATL2 falls below the above-described range, it may be challenging to improve or maximize the ion conductivity improving effect.

FIGS. 8A to 8C are enlarged views for explaining an electrode according to comparative examples. That is, FIG. 8 is an enlarged view of the "M" region in FIG. 6 when the electrode is from the comparative example.

Referring to FIG. 8A, an electrode according to a comparative example includes a current collector COL and a first active material layer ATL1 positioned on the electrode current collector COL.

The electrode according to the comparative example may include the first active material CAM1, the conductive material CDM, and the binder BND in the first active material layer ATL1.

The first active material CAM1 may be the same as the first active material CAM1 described above.

The binder BND may firmly attach the first active material CAM1 particles to each other, and to securely attach the first actively material CAM1 to the electrode current collector COL.

The conductive material CDM imparts conductivity to an electrode, and any electron-conductive material that does not cause a chemical change in the battery being constructed may be used.

The active material layer AML according to another example embodiment of the present disclosure may include a binder BND or a conductive material CDM separated from the composite conductive materials CCM1 and CCM2 in a trace amount. For example, the amount of the binder BND in the active material layer AML may be 0.1 wt% or less, and the amount of the conductive material CDM may be 0.1% or less. That is, because the binder BND or the conductive material CDM may be included in an extremely small amount in the active material layer AML according to the example embodiment, it may be considered that the binder BND or the conductive material CDM is substantially omitted.

In the electrode according to the comparative example, the value of the total amount of the binder BND and the conductive material CDM in the first active material layer ATL1 may be greater than the value of the amount of the first composite conductive material CCM1 in the first active material layer ATL1 in the electrode according to example embodiments. As an example, in the electrode according to the comparative example, the value of the total amount of the binder BND and the conductive material CDM in the first active material layer ATL1 may be about 1 to 3 times greater than the value of the amount of the first composite conductive material CCM1 in the first active material layer ATL1 in the electrode according the example embodiments.

Because the first composite conductive material CCM1 includes a structure in which a carbon nanostructure and a polymer are closely bonded to each other, conductivity and adhesiveness can be improved or maximized even with a small amount.

Referring to FIG. 8B, an electrode according to a comparative example includes a current collector COL, a first active material layer ATL1 located on the electrode current collector COL, and a second active material layer ATL2 on the first active material layer ATL1. The first active material layers ATL1 includes a first active material CAM1, a conductive material CDM, and a binder BND, and the second active material layers ATL2 includes a second composite conductive material CCM2.

The electrode according to the comparative example, which has the above-described structure, can secure a flow path for lithium ions on the surface of the second active material layer ATL2 because the second composite conductive material CCM2 includes a structure in which the carbon nanostructure and polymer are closely bonded. However, in the electrode according to the comparative example may encounter an issue where the ionic conductivity is reduced due to the addition of the binder BND and conductive material CDM to the first active material layer ATL1.

The electrode according to the example embodiments may have an relatively higher porosity compared to the first active material layer ATL1 according to the comparative example, by using the first composite conductive material CCM1 instead of adding the binder BND and the conductive material CDM in the first active material layers ATL1.

For example, the porosity of the first active material layer ATL1 according to the comparative example may be in a range of about 10% to about 15%, and the porosity of the first active material layer ATL1 of the example embodiment may be 20% to 30%.

The electrode according to the example embodiments, by including the first composite conductive material CCM1, may shorten the path of lithium ion movement, making the movement of lithium ions in the first active material layer ATL1 easier. In other words, the first active material layer ATL1 according to the example embodiments may have improved ionic conductivity.

Referring to FIG. 8C, an electrode according to a comparative example includes an electrode current collector COL, a first active material layer ATL1 located on the electrode current collector COL, and a second active material layer ATL2 on the first active material layer ATL1. The first active material layer ATL1 includes a second composite conductive material CCM2, and the second active material layer ATL2 includes the first composite conductive material CCM1.

The electrode according to the comparative example, having the above-described structure, can secure a flow path of lithium ions in the first active material layer ATL1 and the second active material layer ATL2. However, the electrode according to the comparative example may encounter an issue where adhesion is reduced due to the use of the second composite conductive material CCM2 in the first active material layer ATL1.

The electrodes 10 and 20 according to an example embodiment of the present disclosure may improve adhesion between the current collector COL and the active material layer AML, as well as enhance ionic conductivity within the active material layer AML, by placing the first composite conductive material CCM1 in the first active material layer ATL1 and the second composite conductive material CCM2 in the second active material layer ATL2. Additionally, a flow path of lithium ions on the surface of the active material layer AML may be secured.

FIG. 9 illustrates a cross-sectional view of an electrode according to other example embodiments of the disclosure. FIG. 10 illustrates an enlarged view for illustrating an electrode according to other example embodiments of the present disclosure. That is, FIG. 10 illustrates an enlarged view of the "N" region in FIG. 9. In the example embodiment, a detailed description of technical features that overlap with the description above with reference to FIG. 6 to FIG. 8 is omitted, and differences therewith are described in detail.

Referring to FIGS. 9 and 10, an electrode 10, 20 according to another example embodiment of the present disclosure may include a single layer of active material layer AML' .

The electrodes 10 and 20 may include an electrode current collector COL' and an active material layer AML' on the electrode current collector COL' .

As the electrode current collector COL' , any one or more of aluminum foil, copper foil, nickel foil, stainless-steel foil, titanium foil, nickel foam, copper foam, a polymer substrate coated with a conductive metal, or a combination thereof may be used.

In an example embodiment, aluminum may be used as the electrode current collector COL' , but the electrode current collector COL' is not limited thereto.

The active material layer AML' may be in contact with one surface of the electrode current collector COL' . One surface of the active material layer AML' may be a surface where the active material layer AML' is in contact with the electrode current collector COL' . In the electrodes 10 and 20, the electrode current collector COL' and the active material layer AML' may be stacked, e.g., sequentially stacked.

The active material layer AML' is provided on the electrode current collector COL' and may have a thickness TKL' . For example, the thickness TKL' of the active material layer AML' may be in a range of about 10 $\mu$m to about 170 $\mu$m.

As shown in FIG. 10, the active material layer AML' may include a first active material CAM1' , a first composite conductive material CCM1' , and a second composite conductive material CCM2' .

The first active material CAM1' may be the same as the first active material CAM1 or the second active material CAM2 described above.

The first composite conductive material CCM1' may be the same as the first composite conductive material CCM1 described above, and the second composite conductive material CCM2' may be the same as the second composite conductive materials CCM2 described above.

According to one example embodiment, the amount of the first active material CAM1' may be in a range of about 90% to about 99.5 wt% based on the total weight of the active material layer AML' . According to an example embodiment, the amount of the first composite conductive material CCM1' may be in a range of about 0.1 wt% to about 5 wt%, and the amount of the second composite conductive material CCM2' may be in a range of about 0.1% to about 5 wt% with respect to the total weight of the active material layer AML' .

When the active material layer AML' satisfies the conditions of the amount ranges of the first active material CAM1' , the first composite conductive material CCM1' , content range and the second composite conductive material CCM2' , the capacity and the energy density of the battery can be improved or maximized.

The active material layer AML' may include a first region RG1 adjacent to the electrode current collector COL' , and a second region RG2 adjacent to a surface of the active material layer AML' . For example, the first region RG1 may be a region where the active material layer AML' is in contact with the electrode current collector COL' . The second region RG2 may be a region where the active material layer AML' is not in contact with the electrode current collector COL' .

The first region RG1 of the active material layer AML' may include the first active material CAM1' and the first composite conductive material CCM1' . The second region RG2 of the active material layer AML ' may include the first

active material CAM1' and the second composite conductive material CCM2' . That is, the first composite conductive material CCM1' may be disposed in the first region RG1 of the active material layer AML' , and the second composite conductive material CCM2' may be disposed on the second region RG2 of the active material layers AML' .

According to an example embodiment, in the first region RG1, the first active material CAM1' and the first composite conductive material CCM1' may be included in a weight ratio in a range of about 95:5 to about 99.9:0.1. In the second region RG2, the first active material CAM1' and the second composite conductive material CCM2' may be included in a weight ratio in a range of about 95:5 to about 99.9:0.1.

When the first composite conductive material CCM1' is not included in the first region RG1, or the amount of the first composite conductive materials CCM1' falls outside the above-described range, it may be challenging to improve or maximize the adhesion-enhancing effect. When the second composite conductive material CCM2' is not included in the second region RG2, or the amount of the second composite conductive materials CCM2' falls outside the above-described range, it may be challenging to improve or maximize the ion conductivity-enhancing effect.

According to other example embodiments, when the active material layer AML' is present as a single layer, the electrodes 10 and 20 may include the first composite conductive material CCM1' in the first region RG1, and the second composite conductive material CCM2' in the second region RG2. The electrodes 10 and 20 according to other example embodiments may enhance adhesion between the electrode current collector COL' and the active material layer AML' , while also securing a flow path of lithium ions on the surface of the active material layer AML' .

## Method of manufacturing an electrode

FIG. 11 illustrates a diagram for describing a method of manufacturing an electrode according to an example embodiment of the present disclosure.

Referring to FIG. 11, a method of manufacturing an electrode for a rechargeable lithium battery according to an example embodiment of the present disclosure may include providing an electrode current collector COL, forming a first active material layer ATL1 on the electrode current collector COL, and forming a second active material layer ATL2 on the first active material layer ATL1.

In an example embodiment, the first active material layer ATL1 may include the first active material CAM1 and the first composite conductive material CCM1 described above with reference to FIGS. 6 to 7. In an example embodiment, the second active material layer ATL2 may include the second active material CAM2 and the second composite conductive material CCM2 described above with reference to FIGS. 6 to 7.

Because each of the electrode current collector COL, the first active material layer ATL1, and the second active material layer ATL2 has the same configuration as the configuration of the electrode 10, 20 according to the above-described embodiments, a detailed description thereof is omitted hereinafter.

The first composite conductive material (CCM1) may include a first carbon nanostructure, and a first polymer chemically bonded to a surface of the first carbon nanostructure.

The second composite conductive material (CCM2) may include a second carbon nanostructure, and a second polymer chemically bonded to a surface of the second carbon nanostructure.

Each of, or at least one of, the first and second carbon nanostructures may include at least one of carbon nanotubes (CNTs), carbon nanofibers (CNFs), polyacetylene, graphene nanoribbons (GNRs), graphene sheets, fullerenes, nanodiamonds, mesoporous carbon, amorphous carbon, carbon quantum dots, nanoporous carbon, carbon black, nanohorns, or vitreous carbon.

The first polymer is different from the second polymer, and the ionic conductivity of the second polymer may be higher than the ionic conductivity of the first polymer.

The first polymer may include at least one of the first structural unit to the second structural unit described above.

The first polymer may include a first structural unit, a second structural unit and copolymers thereof. For example, the first structural unit may be derived from polyvinyl alcohol (PVA). For example, the second structural unit may be derived from polyacrylonitrile (PAN).

According to an example embodiment, the first polymer may include at least one of a PVA-PAN (polyvinyl alcohol-polyacrylonitrile) copolymer, a PVA-PEG (polyvinyalcohol-polyethylene glycol) copolymer, or a PAA-PAN (polyacrylamide-polyacrylonitrile) copolymer.

The second polymer may include at least one of the third to sixth structural units described above. For example, the second polymer may be or include a copolymer prepared by combining the third structural unit to the sixth structural unit.

For example, the third structural unit may be derived from acrylic acid. For example, the fourth structural unit may be derived from acrylonitrile. For example, the fifth structural unit may be derived from sulfobetaine (SB), or vinylimidazolium sulfonate (IMS). For example, the sixth structural unit may be derived from ethylene glycol.

Manufacturing the first composite conductive material (CCM1) may include introducing a functional group onto a surface of the first carbon nanostructure; mixing the functionalized first carbon nanostructure with a first polymer to prepare

a first mixture; and stirring and heat-treating the first mixture.

Manufacturing the second composite conductive material (CCM2) may include introducing a functional group onto a surface of the second carbon nanostructure; mixing the functionalized second carbon nanostructure with a second polymer to prepare a second mixture; and stirring and heat-treating the second mixture.

FIG. 12A is a schematic view showing a manufacturing process of the composite conductive material according to the present disclosure. With reference to FIG. 12A, a method for manufacturing the first and second composite conductive materials CCM1 and CCM2 is, for example, described as follows.

Each of the first and second carbon nanostructures CCM1, CCM2 may include a pretreatment process that introduces functional groups, such as carboxyl groups (-COOH), hydroxyl groups (-OH), onto the surface of each of the first and the second carbon nanostructure for chemical modification.

Introducing the functional group into the first carbon nanostructure or the second carbon nanostructure may include a pretreatment process using at least one of a wet treatment using a strong acid, a plasma treatment, or a dry treatment using vacuum ultraviolet irradiation.

Manufacturing the first mixture may include mixing the functionalized first carbon nanostructure with a first polymer. For example, the prepared first mixture may be obtained by adding the first carbon nanostructures to a solvent containing the first polymer. The prepared first mixture may undergo a chemical reaction to induce chemical bonding.

Manufacturing the second mixture may include mixing the functionalized second carbon nanostructure with a second polymer. For example, the prepared second mixture may be obtained by adding the second carbon nanostructure to a solvent containing the second polymer. The prepared second mixture may undergo a chemical reaction to induce chemical bonding.

Each of the first and second mixtures may be subjected to stirring and heat treatment to facilitate a chemical reaction. In one example, the stirring and heat treating may be performed at a temperature in the range of about 60° C to about 90° C

According to an example embodiment, each of, or at least one of, the first and second mixtures may further include a crosslinking agent and a catalyst to activate the chemical reaction.

The first mixture, after the completion of the reaction, may be dried to ultimately produce the first composite conductive material CCM1, in which the first carbon nanostructures and the first polymer are chemically bonded. The second mixture, after the completion of the reaction, may be dried to ultimately produce the second composite conductive material CCM2, in which the second carbon nanostructures and the second polymer are chemically bonded.

According to another example embodiment, the first composite conductive material CCM1 may be prepared by first producing a first mixture through the mixing of the first polymer and the first carbon nanostructure with introduced functional groups. The first mixture may then undergo vaporization or gelation, allowing the first carbon nanostructure and the first polymer to be naturally arranged through a self-assembly process. The first composite conductive material CCM1, produced by self-assembly, may form a specific structure in which the first carbon nanostructure is arranged between the first polymer chains.

Additionally, according to another example embodiment, the second composite conductive material CCM2 may be prepared by first producing a second mixture through the mixing of the second polymer and the second carbon nanostructure into which functional groups have been introduced. The second mixture may then undergo vaporization or gelation, allowing the second carbon nanostructure and the second polymer to be naturally arranged through a self-assembly process. The second composite conductive material CCM2, produced by self-assembly, may form a specific structure in which the second carbon nanostructure is arranged between the second polymer chains.

On the other hand, when the carbon nanostructure with introduced functional groups is simply mixed with a polymer and used as a composite conductive material, it may be difficult to induce a chemical bond therebetween during the electrode fabrication process. Even when physical bonding is induced therebetween, the bonding strength thereof may be weaker compared to chemical bonding, which may reduce the effectiveness of reducing or suppressing the aggregation of the carbon nanostructure. Herein, the physical bonding refers to a state in which the components are merely mixed without any change in the chemical properties of the components.

According to an example embodiment, the composite conductive materials CCM 1 and CCM2 may form a chemical bond between the carbon nanostructure and the polymer, thereby allowing the carbon nanostructure to be dispersed within the active material layer without agglomeration. Additionally, the composite conductive materials CCM1 and CCM2 have a structure in which a carbon nanostructure and a polymer are closely bonded, allowing for the securement of a flow path of lithium ions in the active material layer. This can enhance the lifespan characteristics of the lithium battery.

FIG. 12B illustrates an enlarged view illustrating composite conductive materials according to an example embodiment of the present disclosure. That is, FIG. 12B is an enlarged view of the region "A" in FIG. 12A.

Referring to FIG. 12B, in the composite conductive materials CCM1 and CCM2, the first polymer or the second polymer may be irregularly bonded to the surface of the carbon nanostructure.

The carbon nanostructures may have an average diameter. The average diameter of the carbon nanostructures

may be a first length $L_1$. The diameter of the carbon nanostructure refers to the length of the short axis, which is perpendicular to the long axis.

The composite conductive materials CCM1 and CCM2 may have the first polymer or the second polymer positioned within a certain range from the surface of the carbon nanostructure. In other words, the composite conductive materials CCM1 and CCM2 may include a structure in which a carbon nanostructure and a polymer are closely bonded.

When the distance directed opposite to the surface of the carbon nanostructure is referred to as a second length L2, the second length L2 may be in the range of about 0.01% to about 10% of the first length L1. For example, the first length L1 may range from about 1 nm to about 100 nm, and the second length L2 may range from about 0.01 nm to about 10 nm.

According to an example embodiment, the first composite conductive material CCM1 may have the first polymer within 5 nm from the surface of the first carbon nanostructure, and the second composite conductive material CCM2 may have the second polymer within 5 nm from the surface of a second carbon nanostructure.

Referring back to FIG. 11, at least one of forming the first active material layer ATL1 and forming the second active material layer ATL2 may include a process performed using a wet process or a dry process. As an example, the first active material layer ATL1 and the second active material layer ATL2 may be formed in a wet process. As an example, the first active material layer ATL1 and the second active material layer ATL2 may be formed in a dry process.

During the wet process, the active materials CAM1 and CAM2 and the composite conductive materials CCM1 and CCM2 are mixed in a solvent to produce a mixture. The wet process may include applying the prepared mixture onto an electrode current collector (COL), followed by drying and rolling. The solvent may be or include a solvent commonly used in the art, and may include, for example, at least one of dimethyl sulfoxide (DMSO), isopropyl alcohol, N-methylpyrrolidone (NMP), acetone, water, or a combination thereof.

The dry process may involve preparing a mixture by dry mixing the active materials CAM1 and CAM and the composite conductive materials CCM1 and CCM2 without a solvent, and then placing the mixture onto the electrode current collector COL and rolling it.

Subsequently, a roll pressing process, a slitting process, and a notching process may be performed, e.g., sequentially performed, on the electrodes 10 and 20 manufactured through the above-described processes. Then, the positive electrode 10, the separator 30, and the negative electrode 20 may be stacked, and an electrolytic solution ELL may be provided to manufacture the rechargeable lithium battery according to the present disclosure.

FIG. 14 is a flowchart illustrating a method of manufacturing an electrode for a rechargeable lithium battery, according to an example embodiment. In FIG. 14, the method includes operation 1410, which includes forming a first active material layer on an electrode current collector. For example, forming the first active material layer includes forming a first active material and forming a first composite conductive material. In a further example, forming the first composite conductive material includes introducing a functional group onto a surface of the first carbon nanostructure, and mixing the functionalized first carbon nanostructure with a first polymer to prepare a first mixture. In other examples, forming the first composite conductive material further includes stirring and heat-treating the first mixture. In yet another example, the first composite conductive material includes the first carbon nanostructure, and the first polymer chemically bonded to the surface of the first carbon nanostructure.

Operation 1420 includes forming a second active material layer on the first active material layer. For example, forming the second active material layer includes forming a second active material and forming a second composite conductive material. In another example, forming the second composite conductive material includes introducing a functional group onto a surface of the second carbon nanostructure, and mixing the functionalized second carbon nanostructure with a second polymer to prepare a second mixture. In other examples, the first polymer is different from the second polymer. In further examples, an ionic conductivity of the second polymer is greater than an ionic conductivity of the first polymer. In another example, forming the second composite conductive material further includes stirring and heat treating the second mixture. In a further example, the second composite conductive material includes the second carbon nanostructure, and the second polymer chemically bonded to the surface of the second carbon nanostructure.

In additional examples, one of introducing the functional group onto the first carbon nanostructure and introducing the functional group onto the second carbon nanostructure includes at least one of a wet treatment using a strong acid, a plasma treatment, a dry treatment using vacuum ultraviolet irradiation, or a combination thereof. For example, the functional group of one of the first carbon nanostructure and the second carbon nanostructure includes at least one of a carboxyl group (-COOH), a hydroxyl group (-OH), or a combination thereof.

In an example, at least one of the first and second carbon nanostructures includes at least one of carbon nanotubes (CNTs), carbon nanofibers (CNFs), polyacetylene, graphene nanoribbons (GNRs), graphene sheets, fullerenes, nanodiamonds, mesoporous carbon, amorphous carbon, carbon quantum dots, nanoporous carbon, carbon black, nanohorns, or vitreous carbon.

In a further example, the first polymer includes at least one of a first structural unit represented by Chemical Formula 1-1, a second structural unit represented by Chemical Formula 1-2, or a combination thereof:

Chemical Formula 1-1:

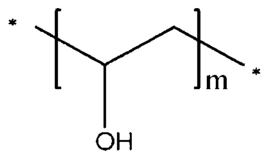

Chemical Formula 1-2:

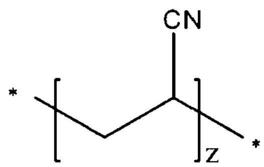

In the Chemical Formulae 1-1 and 1-2, m and z are each independently an integer from 1 to 100.

In another example, the second polymer includes at least one of a third structural unit represented by Chemical Formula 2-1A or Chemical Formula 2-1B, the third structural unit being derived from a (meth)acrylic acid-based monomer or a salt thereof, a fourth structural unit represented by Chemical Formula 2-2, the fourth structural unit being derived from a (meth)acrylonitrile-based monomer, a fifth structural unit represented by Chemical Formula 2-3A or Chemical Formula 2-3B, the fifth structural unit being derived from a zwitterionic monomer, and a sixth structural unit represented by Chemical Formula 2-4A or Chemical Formula 2-4B, the sixth structural unit being derived from an alkylene glycol-based monomer or a salt thereof:

Chemical Formula 2-1A:

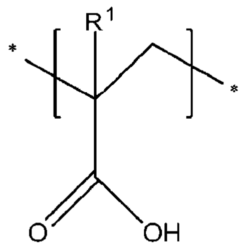

Chemical Formula 2-1B:

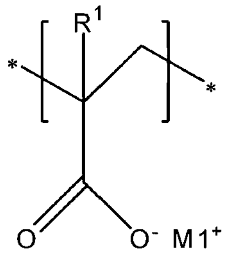

In Chemical Formulae 2-1A and 2-1B, $R^1$ are the same or different, and each independently include a hydrogen atom or a C1 to C20 alkyl group, and M1 include an alkali metal.

Chemical Formula 2-2:

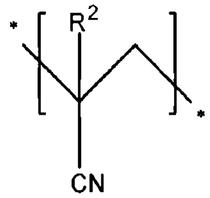

In Chemical Formula 2-2, $R^2$ includes a hydrogen atom or a C1 to C20 alkyl group.

Chemical Formula 2-3A:

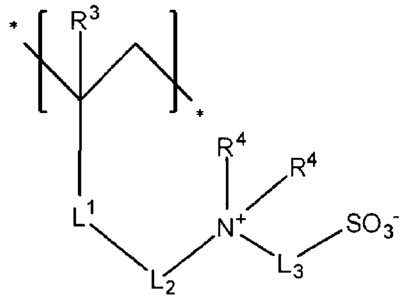

Chemical Formula 2-3B:

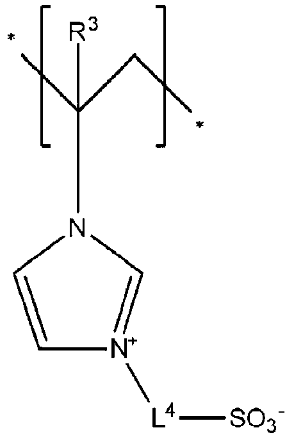

In Chemical Formulae 2-3A and 2-3B, Rs are the same or different, and each independently include a hydrogen atom or a C1 to C20 alkyl group, $R^4$ the same or different, and each independently include a hydrogen atom or a C1 to C20 alkyl group, $L^1$ includes *- (C=O)-$NR^4$ - $CH_2$ -* or *- (C=O) - O - *, and $L^2$ to $L^4$ each independently include a single bond, or a C1 to C20 alkylene group.

Chemical Formula 2-4A:

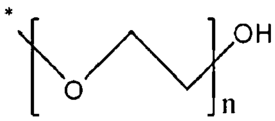

Chemical Formula 2-4B:

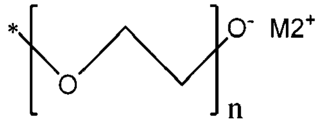

in Chemical Formulae 2-4A and 2-4B, M2 includes an alkali metal, and n is an integer from 1 to 100.

Hereinafter, Examples and Comparative Examples of the present disclosure are described. However, the following examples are merely examples of the present disclosure, and the present disclosure is not limited to the following examples.

**Preparation Example 1: Preparation of a first Composite Conductive Material**

2 g of multi-walled CNTs, having a diameter of about 50 nm and a length of about 25 μm, were pretreated at 40° C for 24 hours with 300 ml of a 20 wt % nitric acid solution. Next, 1 g of the treated CNTs was immersed in 200 ml of a mixed solution of concentrated sulfuric acid and concentrated nitric acid at a volume ratio of 3:1 (v/v %), and then ultrasonicated at room temperature for 3 hours, followed by stirring at 70° C for 6 hours. Thereafter, the acid solution adhered to the CNTs was thoroughly removed by repeated filtering and washing with purified water, followed by drying in a vacuum oven at 80° C for 24 hours to prepare CNTs with introduced carboxyl groups (-COOH).

The reaction vessel was charged with 3 g of the first polymer and 27 g of anhydrous DMAc (dimethyl acetamide), and the mixture was stirred and heated at 100° C for 6 hours under a nitrogen atmosphere to completely dissolve the first polymer in DMAc. Herein, as the first polymer, a PVA-PAN (polyvinyl alcohol-polyacrylonitrile) copolymer was used.

Then, the reaction vessel was cooled to room temperature, and 30 g of the carboxyl group-introduced CNTs was added, followed by ultrasonication for 10 minutes and stirring for 1 hr. The temperature of the reaction vessel was then increased, and the mixture was stirred at 90° C for 24 hours to allow the reaction to proceed. After the reaction was completed, the solution in the reaction vessel was poured into 200 ml of ethyl alcohol solution to precipitate the reaction product. The precipitate was then subjected to filtering, washing, and drying processes to prepare the first composite conductive material in which the first polymer was bonded to the surface of the CNTs.

**Preparation Example 2: Preparation of a Second Polymer**

A monomer mixture comprising 51 wt% acrylic acid (AA), 39 wt% acrylonitrile (AN), 5 wt% sulfobetaine (SB), and 5 wt% alkylene glycol (ethylene glycol, repeating unit (n) = 8) was mixed with an azo compound initiator and water, based on 100 parts by weight of the monomer mixture. The initiator was used in an amount of 0.2 parts by weight based on 100 parts by weight of the monomer mixture.

The resulting mixture was then subjected to emulsion polymerization to prepare a solution comprising a third structural unit derived from acrylic acid; a fourth structural unit derived from acrylonitrile; a fifth structural unit derived from sulfobetaine; and a sixth structural unit derived from ethyleneglycol (ethyleneglycol repeating number (n)=8). That is, the prepared second polymer is a PAA-AN-SB-PEG copolymer having a weight-average molecular weight of 720,500 g/mol.

**Preparation Example 3: Preparation of a Second Composite Conductive Material**

2 g of multi-walled CNTs, having a diameter of about 50 nm and a length of about 25 μm, were pretreated at 40° C for 24 hours with 300 ml of a 20 wt % nitric acid solution. Next, 1 g of the treated CNTs was immersed in 200 ml of a mixed solution of concentrated sulfuric acid and concentrated nitric acid at a volume ratio of 3:1 (v/v %), and then ultrasonicated at room temperature for 3 hours, followed by stirring at 70° C for 6 hours. Thereafter, the acid solution adhered to the CNTs was thoroughly removed by repeated filtering and washing with purified water, followed by drying in a vacuum oven at 80° C for 24 hours to prepare CNTs with introduced carboxyl groups (-COOH).

The reaction vessel was charged with 3 g of the second polymer and 27 g of anhydrous DMAc (dimethyl acetamide), and the mixture was stirred and heated at 100° C for 6 hours under a nitrogen atmosphere to completely dissolve the second polymer in DMAc.

Then, the reaction vessel was cooled to room temperature, and 30 g of the carboxyl group-introduced CNTs was added, followed by ultrasonication for 10 minutes and stirring for 1 hr. The temperature of the reaction vessel was then increased, and the mixture was stirred at 90° C for 24 hours to allow the reaction to proceed. After the reaction was completed, the solution in the reaction vessel was poured into 200 ml of ethyl alcohol solution to precipitate the reaction product. The precipitate was then subjected to filtering, washing, and drying processes to prepare the second composite conductive material in which the second polymer was bonded to the surface of the CNTs.

**Example 1: Preparation of a Positive Electrode**

The first positive electrode active material and the previously prepared first composite conductive material were dispersed in N-methylpyrrolidone at a weight ratio of 100:1 to prepare a first active material slurry.
The second positive electrode active material and the previously prepared second composite conductive material were dispersed in N-methylpyrrolidone at a weight ratio of 100:1 to prepare a second active material slurry.
In Example 1, $LiNiCoAlO_2$ was used as the first and second positive electrode active materials.
The prepared first active material slurry was applied to an aluminum (Al) thin film, which constitutes a positive electrode current collector and has a thickness of about 12 μm, and dried to form a first active material layer having a thickness of about 30 μm. The prepared second active material slurry was applied onto the first active material layer and dried to form a second active material layer having a thickness of about 30 μm. A roll-pressing process was conducted to fabricate a positive electrode in which an aluminum current collector, the first active material layer, and the second active material layer were sequentially stacked.

**Example 2**

A positive electrode was prepared in the same manner as in Example 1, with a difference that the weight ratio of the first positive electrode active material and the first composite conductive material in the first active material slurry in the preparation of the positive electrode was set to 100:0.5.

**Example 3**

A positive electrode was prepared in the same manner as in Example 1, with a difference that the weight ratio of the second positive electrode active material and the second composite conductive material in the second active material slurry in the preparation of the positive electrode was set to 100:0.5.

**Example 4**

A positive electrode was prepared in the same manner as in Example 1 with a difference that a PVA-PEG (polyvinyl alcohol-polyethylene glycol) copolymer was used as the first polymer instead of the PVA-PAN copolymer during the preparation of the first composite conductive material.

**Example 5**

A positive electrode was prepared in the same manner as in Example 1, with a difference that a PAA-AN-SB copolymer was used as the second polymer instead of the PAA-AN-SB-PEG copolymer during the preparation of the second composite conductive material.
For example, the PAA-AN-SB copolymer was prepared by the following method.
A monomer mixture comprising 50 wt% acrylic acid (AA), 40 wt% acrylonitrile (AN), and 10 wt% sulfobetaine (SB) was mixed with an azo compound initiator and water. The initiator was used in an amount of 0.2 parts by weight based on 100 parts by weight of the monomer mixture. The resulting mixture was then subjected to emulsion polymerization to prepare a PAA-AN-SB copolymer having a third structural unit derived from acrylic acid, a fourth structural unit derived from an acrylonitrile, and a fifth structural unit derived from sulfobetaine.

**Comparative Example 1: Positive Electrode with a Single Active Material Layer Structure**

A third active material slurry was prepared by dispersing a first positive electrode active material, a conductive material, and a binder in N-methylpyrrolidone at a weight ratio of 100:0.2:0.9.
In Comparative Example 1, $LiNiCoAlO_2$ was used as the positive electrode active material, carbon nanotubes (CNTs) were used as the conductive material, and polyvinylidene fluoride (PVdF) was used as the binder.
The prepared third active material slurry was applied to an aluminum (Al) thin film, which constitutes a positive electrode current collector and has a thickness of about 12 μm, and dried to form a first active material layer having a thickness of about 30 μm. A roll-pressing process was conducted to fabricate a positive electrode in which an aluminum current collector and the first active material layer were sequentially stacked.

**Comparative Example 2**

A positive electrode was prepared in the same manner as in Example 1, with a difference that the first active

material layer was formed using the third active material slurry instead of the first active material slurry during the preparation of the positive electrode.

The third active material slurry was prepared by dispersing the first positive electrode active material, the conductive material, and the binder in N-methylpyrrolidone at a weight ratio of 100:0.2:0.9.

In Comparative Example 2, $LiNiCoAlO_2$ was used as the first positive electrode active material, carbon nanotubes (CNT) were used as the conductive material, and polyvinylidene fluoride (PVdF) was used as the binder.

**Comparative Example 3**

A positive electrode was prepared in the same manner as in Example 1, with a difference that the second active material slurry was applied onto the positive electrode current collector to form a first active material layer, and then the first active material slurry was applied to the first active material layer to form a second active material layer, during the preparation of the positive electrode.

For example, the prepared second active material slurry was applied to an aluminum (Al) thin film, which constitutes a positive electrode current collector and has a thickness of about 12 μm, and dried to form a first active material layer having a thickness of about 30 μm. The prepared first active material slurry was applied onto the first active material layer and dried to form a second active material layer having a thickness of about 30 μm. A roll-pressing process was then conducted to fabricate a positive electrode in which an aluminum current collector; the first active material layer; and the second active material layer were sequentially stacked.

The compositions of the positive electrodes according to the above Examples and Comparative Examples are shown in Table 1 below.

Table 1:

| Example | | Positive Electrode Active Material Amount (wt %) | First Composite Conductive Material Amount (wt %) | Composite Conductive Material Amount (wt %) |
|---|---|---|---|---|
| Example 1 | First Active Material Layer | 100 | 1 (CNT/PVA-PAN) | |
| | Second Active Material Layer | 100 | - | 1 (CNT/PAA-AN-SB-PEG) |
| Example 2 | First Active Material Layer | 100 | 0.5 (CNT/PVA-PAN) | - |
| | Second Active Material Layer | 100 | - | 1 (CNT/PAA-AN-SB-PEG) |
| Example 3 | First Active Material Layer | 100 | 1 (CNT/PVA-PAN) | - |
| | Second Active Material Layer | 100 | - | 0.5 (CNT/PAA-AN-SB-PEG) |
| Example 4 | First Active Material Layer | 100 | 1 (CNT/PVA- PEG) | - |
| | Second Active Material Layer | 100 | - | 1 (CNT/PAA-AN-SB-PEG) |

(continued)

| Example | | Positive Electrode Active Material Amount (wt %) | First Composite Conductive Material Amount (wt %) | Composite Conductive Material Amount (wt %) |
|---|---|---|---|---|
| Example 5 | First Active Material Layer | 100 | 1 (CNT/PVA-PAN) | |
| | Second Active Material Layer | 100 | - | 1 (CNT/PAA-AN-SB) |
| Comparative Example 1 | First Active Material Layer | 100 | - | - |
| | Second Active Material Layer | | - | - |
| Comparative Example 2 | First Active Material Layer | 100 | - | - |
| | Second Active Material Layer | 100 | - | 1 (CNT/PAA-AN-SB-PEG) |
| Comparative Example 3 | First Active Material Layer | 100 | - | 1 (CNT/PAA-AN-SB-PEG) |
| | Second Active Material Layer | 100 | 1 (CNT/PVA-PAN) | - |

**Evaluation Example 1: Confirmation of Composite Conductive Material Structure**

The first composite conductive material produced in Example 1 was photographed using a scanning electron microscope (SEM).

FIG. 13 illustrates an SEM image of the surface of the first composite conductive material prepared in Examples.

Referring to FIG. 13, when the first composite conductive material prepared in Examples was observed using a scanning electron microscope (SEM), it was found that the first polymer was located within 5 nm from the surface of the carbon nanostructure.

Similarly, when the second composite conductive material prepared in Examples was observed with a scanning electron microscope (SEM), the second polymer can be located within 5 nm from the surface of the carbon nanostructure.

**Evaluation Example 2: Evaluation of Adhesion and Ionic Conductivity**

The peel strength of the positive electrodes prepared in Examples and Comparative Examples was measured using a method in accordance with ASTM D3330. The measurement was conducted using a universal testing machine (UTM), Instron 3345.

Specifically, 20 specimens were prepared by cutting the positive electrode plates from Examples and Comparative Examples to dimensions of 25 mm×150 mm. At room temperature, an adhesive was coated onto a glass substrate, and the positive electrode plate was attached onto the adhesive, followed by roll pressing. Then, one end of the positive electrode plate was folded back at 180 degrees, and the applied force was measured while pulling at a speed of 100 mm/min in the direction opposite to the one end. The measurement results are shown in Table 2 below.

The surface resistance of the positive electrodes prepared in Examples and Comparative Examples was measured.

The surface resistance was measured five (5) times at room temperature (about 25° C) using Laresta-GP (MCP-T600 model, MITSUBISHI CHEMICAL), and the average value was obtained. The results are shown in Table 2 below.

Table 2:

| Example | Peel Strength (gf/mm) | Resistance ($\Omega$ cm$^2$) |
|---|---|---|
| Example 1 | 0.80 | 0.35 |
| Example 2 | 0.71 | 0.32 |
| Example 3 | 0.81 | 0.49 |
| Example 4 | 0.79 | 0.40 |
| Example 5 | 0.78 | 0.44 |
| Comparative Example 1 | 0.79 | 0.88 |
| Comparative Example 2 | 0.80 | 0.62 |
| Comparative Example 3 | 0.61 | 0.63 |

As shown in Table 2, the electrodes of the Examples exhibited improved ionic conductivity at room temperature compared to the electrodes of the Comparative Examples.

Additionally, the peel strength of the positive electrodes in the Examples was superior to the peel strength of the positive electrode in Comparative Example 3. Accordingly, it was confirmed that the positive electrodes of Examples exhibited desired or improved adhesion force between the positive electrode active material layer and the current collector while also demonstrating desired or improved ionic conductivity.

**Evaluation Example 3: Evaluation of Charge-Discharge Cycle Characteristics**

Production of a Rechargeable Lithium Battery:

About 98 wt% of a negative electrode active material, which consists of graphite and a Si composite at a weight ratio of about 92:8, about 1 wt% of styrene-butadiene rubber (SBR) and about 1 wt% of carboxymethyl cellulose (CMC) were mixed. The mixture was then added to distilled water and stirred for 60 minutes using a mechanical stirrer to obtain a negative electrode active material slurry. The slurry was applied onto a 10 μm-thick copper current collector to a thickness of about 60 μm using a doctor blade, and then dried in a hot air dryer at 100° C for 0.5 hours. Subsequently, the coating was further dried under a vacuum at 120° C for 4 hours, followed by roll pressing to prepare a negative electrode.

An electrolytic was prepared by dissolving 1.15 M of $LiPF_6$ in a non-aqueous organic solvent, which was a mixture of ethylene carbonate (EC), ethyl methyl carbonate (EMC), and dimethyl carbonate (DMC) at a volume ratio of 20:40:40.

A rechargeable lithium battery was prepared by assembling an electrode assembly comprising the positive electrodes prepared in the Examples and Comparative Examples, the negative electrode, and a polyethylene separator having a thickness of about 16 μm, and then injecting the electrolyte.

The lithium secondary batteries prepared in Examples and Comparative Examples were charged at 25° C under 0.5 C charging conditions (CC/CV, 4.25 V, 0.05 C Cut-off) and discharged at 0.5 C discharging conditions (CC, 2.8 V Cut-off) for 300 cycles. After 300 cycles, the discharge capacity was measured, and the capacity retention was calculated. The results are shown in Table 3 below. The capacity retention rate was calculated according to the following Formula 1.

Capacity retention (%) = (Discharge capacity after 300 cycles/Initial discharge capacity) $\times$ 100. Formula 1:

Table 3:

| Example | Capacity Retention (%) |
|---|---|
| Example 1 | 96.5 |
| Example 2 | 93.7 |
| Example 3 | 95.7 |
| Example 4 | 92.3 |
| Example 5 | 95.0 |
| Comparative Example 1 | 85.6 |
| Comparative Example 2 | 89.0 |

(continued)

| Example | Capacity Retention (%) |
|---|---|
| Comparative Example 3 | 88.2 |

Referring to Table 3 above, it was confirmed that when using the electrodes according to the examples of the present disclosure (Examples 1 to 5), the capacity retention after charge-discharge cycles at room temperature was improved compared to the electrodes according to Comparative Examples.

The electrode according to the present disclosure can improve the lifespan characteristics of a rechargeable lithium battery by disposing the first composite conductive material with desired or improved adhesiveness in the lower active material layer and disposing the second composite conductive material with improved ionic conductivity in the upper active material layer.

While the present disclosure has been described with reference to example embodiments, it should be understood that these example embodiments are provided for illustrative purposes only and do not limit the scope of the present disclosure. Various modifications and equivalent arrangements may be made without departing from the spirit and scope of the appended claims. Accordingly, the described embodiments should be regarded as examples rather than limitations of the present disclosure.

The present disclosure can be described further by the following numbered embodiments:

1. An electrode for a rechargeable lithium battery, the electrode comprising:

an electrode current collector;
a first active material layer on the electrode current collector; and
a second active material layer on the first active material layer,
wherein the first active material layer comprises a first active material and a first composite conductive material,
wherein the second active material layer comprises a second active material and a second composite conductive material,
wherein the first composite conductive material comprises a first carbon nanostructure, and a first polymer chemically bonded to a surface of the first carbon nanostructure,
wherein the second composite conductive material comprises a second carbon nanostructure, and a second polymer chemically bonded to a surface of the second carbon nanostructure,
wherein the first polymer is different from the second polymer, and
wherein ionic conductivity of the second polymer is greater than ionic conductivity of the first polymer.

2. The electrode of embodiment 1,
wherein a glass transition temperature (Tg) of the first polymer is lower than a glass transition temperature (Tg) of the second polymer.

3. The electrode of embodiment 1,

wherein the first polymer comprises at least one of a first structural unit represented by Chemical Formula 1-1, a second structural unit represented by Chemical Formula 1-2, or a combination thereof,

[Chemical Formula 1-1]

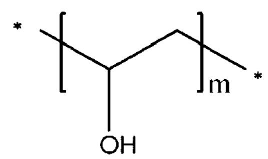

[Chemical Formula 1-2]

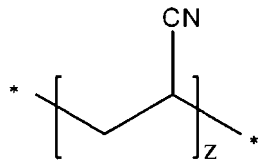

wherein, in the Chemical Formulae 1-1 and 1-2, m and z are each independently an integer from 1 to 100.

4. The electrode of embodiment 1,
wherein the first polymer comprises at least one of polyvinylalcohol (PVA), polyacrylonitrile (PAN), polyacrylic acid (PAA), polyethylene (PE), polyethylene glycol (PEG), polyimide (PI), polyacrylamide (PAM), polystyrene (PS), polyurethane (PU), polyvinylbutyral (PVB), polyvinylpyrrolidone (PVP), or a combination thereof.

5. The electrode of embodiment 1,
wherein the second polymer comprises:

a third structural unit represented by Chemical Formula 2-1A or Chemical Formula 2-1B, the third structural unit being derived from a (meth)acrylic acid-based monomer or a salt thereof;
a fourth structural unit represented by Chemical Formula 2-2, the fourth structural unit being derived from a (meth)acrylonitrile-based monomer; and
a fifth structural unit represented by Chemical Formula 2-3A or Chemical Formula 2-3B, the fifth structural unit being derived from a zwitterionic monomer,

[Chemical Formula 2-1A]

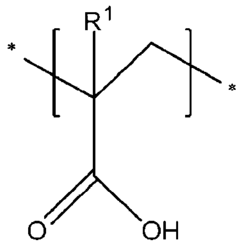

[Chemical Formula 2-1B]

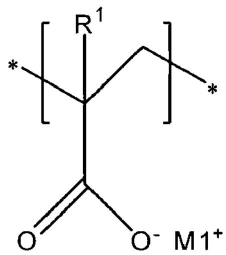

wherein, in the Chemical Formulae 2-1A and 2-1B,
$R^1$s are the same or different, and are each independently a hydrogen atom or a C1 to C20 alkyl group, and
M1 is an alkali metal,

[Chemical Formula 2-2]

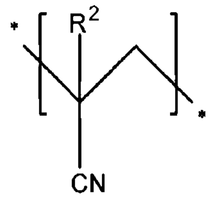

wherein, in the Chemical Formula 2-2, $R^2$ is a hydrogen atom or a C1 to C20 alkyl group,

[Chemical Formula 2-3A]

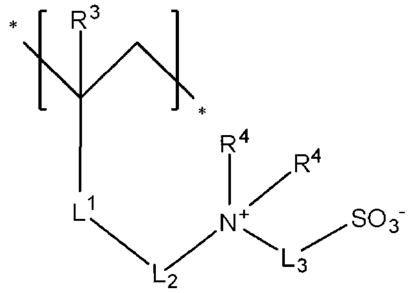

[Chemical Formula 2-3B]

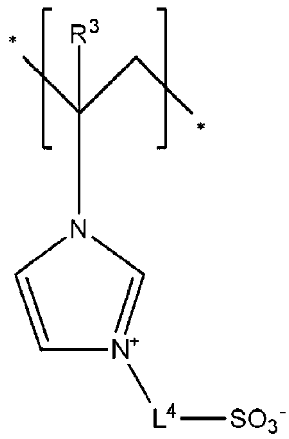

wherein, in the Chemical Formulae 2-3A and 2-3B,
$R^3$s are the same or different, and are each independently a hydrogen atom or a C1 to C20 alkyl group,
$R^4$s are the same or different, and are each independently a hydrogen atom or a C1 to C20 alkyl group,
$L^1$ is *- (C=O) -$NR^4$-$CH_2$-* or *- (C=O) - O - *, and
$L^2$ to $L^4$ are each independently a single bond, or a C1 to C20 alkylene group.

6. The electrode of embodiment 5,

wherein the second polymer further comprises a sixth structural unit represented by Chemical Formula 2-4A or Chemical Formula 2-4B, the sixth structural unit being derived from an alkylene glycol-based monomer or a salt thereof,

[Chemical Formula 2-4A]

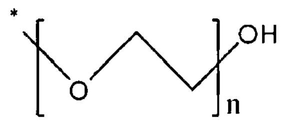

[Chemical Formula 2-4B]

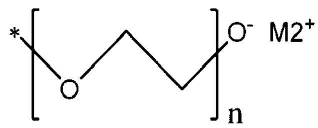

wherein, in the Chemical Formulae 2-4A and 2-4B, M2 is an alkali metal, and n is an integer from 1 to 100.

7. The electrode of embodiment 1,

wherein a weight ratio of the first polymer ranges from about 40 wt% to about 80 wt% based on a total weight of the first composite conductive material;
wherein a weight ratio of the second polymer ranges from about 40 wt% to about 80 wt% based on a total weight of the second composite conductive material;
wherein a amount of the first composite conductive material in the first active material layer ranges from about 0.1 wt% to about 5 wt%; and
wherein a amount of the second composite conductive material in the second active material layer ranges from about about 0.1 wt% to about 5 wt%.

8. The electrode of embodiment 1,

wherein, (when the first composite conductive material is observed using a scanning electron microscope (SEM)), the first polymer is located within about 10 nm from the surface of the first carbon nanostructure, and
wherein, (when the second composite conductive material is observed using a scanning electron microscope (SEM)), the second polymer is located within about 10 nm from a surface of the second carbon nanostructure.

9. The electrode of embodiment 1,
wherein each of the first and second carbon nanostructures comprises at least one of carbon nanotubes (CNTs), carbon nanofibers (CNFs), polyacetylene, graphene nanoribbons (GNRs), graphene sheets, fullerenes, nanodiamonds, mesoporous carbon, amorphous carbon, carbon quantum dots, nanoporous carbon, carbon black, nanohorns, or vitreous carbon.

10. The electrode of embodiment 1,

wherein each of the first and second active materials is represented by Chemical Formula 3,

[Chemical Formula 3] $Li_{x4}M^1_yM^2_zM^3_{1-y-z}O_{2-a}X_a$

wherein, in the Chemical Formula 3,

$$0.5 \leq x4 \leq 1.8,\ 0 \leq a \leq 0.05,\ 0 < y \leq 1,\ 0 \leq z \leq 1,\ 0 \leq y+z \leq 1,$$

$M^1$, $M^2$ and $M^3$ are each independently Ni, Co, Mn, Al, B, Ba, Ca, Ce, Cr, Fe, Mo, Nb, Si, Sr, Mg, Ti, V, W, Zr, La, or a combination thereof, and
X is one or more elements selected from F, S, P, or Cl.

11. The electrode of embodiment 1,
wherein each of the first and second active material layers is free of a binder.

12. A method of manufacturing an electrode for a rechargeable lithium battery, the method comprising:

forming a first active material layer on an electrode current collector; and
forming a second active material layer on the first active material layer,
wherein the first active material layer comprises a first active material and a first composite conductive material, and
wherein the second active material layer comprises a second active material and a second composite conductive material, and
wherein forming the first composite conductive material comprises:

introducing a functional group onto a surface of the first carbon nanostructure; and
mixing the functionalized first carbon nanostructure with a first polymer to prepare a first mixture,
wherein forming the second composite conductive material comprises:

introducing a functional group onto a surface of the second carbon nanostructure; and
mixing the functionalized second carbon nanostructure with a second polymer to prepare a second mixture,
wherein the first polymer is different from the second polymer, and
wherein ionic conductivity of the second polymer is greater than ionic conductivity of the first polymer.

13. The method of embodiment 12,

wherein forming the first composite conductive material further comprises stirring and heat-treating the first mixture, and
wherein forming the second composite conductive material further comprises stirring and heat treating the second mixture.

14. The method of embodiment 12,

wherein the first composite conductive material comprises the first carbon nanostructure, and the first polymer chemically bonded to the surface of the first carbon nanostructure, and
wherein the second composite conductive material comprises the second carbon nanostructure, and the second polymer chemically bonded to the surface of the second carbon nanostructure.

15. The method of embodiment 12,
wherein introducing the functional group onto the first carbon nanostructure or the second carbon nanostructure comprises at least one of a wet treatment using a strong acid, a plasma treatment, a dry treatment using vacuum ultraviolet irradiation, or a combination thereof.

16. The method of embodiment 12,
wherein the functional group of the first carbon nanostructure or the second carbon nanostructure comprises at least one of a carboxyl group (-COOH), a hydroxyl group (-OH), or a combination thereof.

17. The method of embodiment 12,
wherein each of the first and second carbon nanostructures comprises at least one of carbon nanotubes (CNTs), carbon nanofibers (CNFs), polyacetylene, graphene nanoribbons (GNRs), graphene sheets, fullerenes, nanodiamonds, mesoporous carbon, amorphous carbon, carbon quantum dots, nanoporous carbon, carbon black, nanohorns, or vitreous carbon.

18. The method of embodiment 12,

wherein the first polymer comprises at least one of a first structural unit represented by Chemical Formula 1-1, a second structural unit represented by Chemical Formula 1-2, or a combination thereof,

[Chemical Formula 1-1]

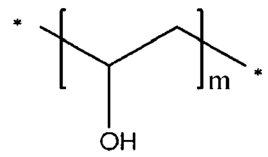

[Chemical Formula 1-2]

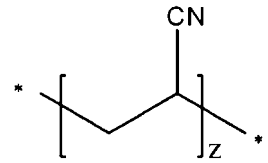

wherein, in the Chemical Formulae 1-1 and 1-2, m and z are each independently an integer from 1 to 100.

19. The method of embodiment 12,
wherein the second polymer comprises at least one of:

a third structural unit represented by Chemical Formula 2-1A or Chemical Formula 2-1B, the third structural unit being derived from a (meth)acrylic acid-based monomer or a salt thereof;
a fourth structural unit represented by Chemical Formula 2-2, the fourth structural unit being derived from a (meth) acrylonitrile-based monomer;
a fifth structural unit represented by Chemical Formula 2-3A or Chemical Formula 2-3B, the fifth structural unit being derived from a zwitterionic monomer; or
a sixth structural unit represented by Chemical Formula 2-4A or Chemical Formula 2-4B, the sixth structural unit being derived from an alkylene glycol-based monomer or a salt thereof,

[Chemical Formula 2-1A]

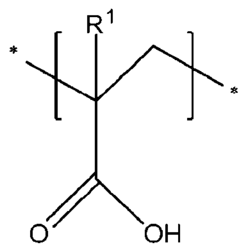

[Chemical Formula 2-1B]

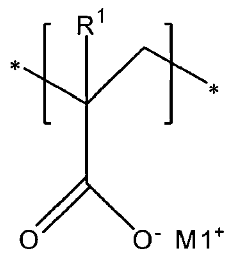

wherein, in the Chemical Formulae 2-1A and 2-1B,
$R^1$s are the same or different, and are each independently a hydrogen atom or a C1 to C20 alkyl group, and
M1 is an alkali metal,

[Chemical Formula 2-2]

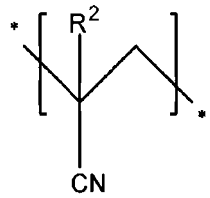

wherein, in the Chemical Formula 2-2,
$R^2$ is a hydrogen atom or a C1 to C20 alkyl group,

[Chemical Formula 2-3A]

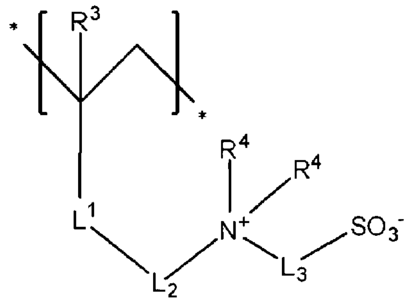

[Chemical Formula 2-3B]

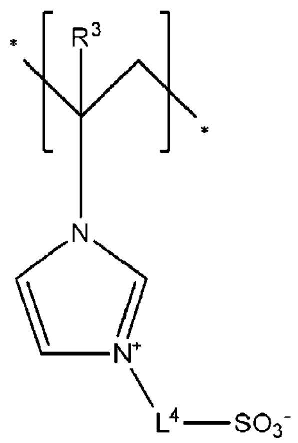

wherein, in the Chemical Formulae 2-3A and 2-3B,
$R^3$s are the same or different, and are each independently a hydrogen atom or a C1 to C20 alkyl group,
$R^4$s are the same or different, and are each independently a hydrogen atom or a C1 to C20 alkyl group,
$L^1$ is *- (C=O)-$NR^4$ - $CH_2$ -* or *- (C=O) - O - *,
$L^2$ to $L^4$ are each independently a single bond, or a C1 to C20 alkylene group,

[Chemical Formula 2-4A]

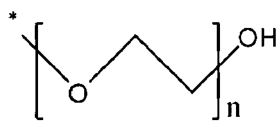

[Chemical Formula 2-4B]

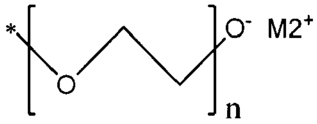

wherein, in Chemical Formulae 2-4A and 2-4B, M2 is an alkali metal, and n is an integer from 1 to 100.

20. A rechargeable lithium battery comprising:

a positive electrode;
a negative electrode;
a separator interposed between the positive electrode and the negative electrode; and
an electrolyte,
wherein at least one of the positive electrode and the negative electrode comprises the electrode of embodiment 1.

## Claims

**1.** An electrode (10, 20) for a rechargeable lithium battery, the electrode (10, 20) comprising:

an electrode current collector;
a first active material layer on the electrode current collector; and
a second active material layer on the first active material layer,
wherein the first active material layer comprises a first active material and a first composite conductive material,
wherein the second active material layer comprises a second active material and a second composite conductive material,
wherein the first composite conductive material comprises a first carbon nanostructure and a first polymer chemically bonded to a surface of the first carbon nanostructure,
wherein the second composite conductive material comprises a second carbon nanostructure and a second polymer chemically bonded to a surface of the second carbon nanostructure,
wherein the first polymer is different from the second polymer, and
wherein an ionic conductivity of the second polymer is greater than an ionic conductivity of the first polymer.

**2.** The electrode (10, 20) as claimed in claim 1, wherein a glass transition temperature (Tg) of the first polymer is lower than a glass transition temperature (Tg) of the second polymer.

**3.** The electrode (10, 20) as claimed in claim 1 or 2,

wherein the first polymer comprises at least one of a first structural unit represented by Chemical Formula 1-1, a second structural unit represented by Chemical Formula 1-2, and a combination thereof,

Chemical Formula 1-1:

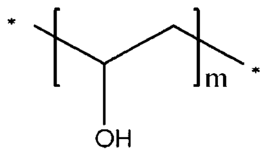

;

Chemical Formula 1-2:

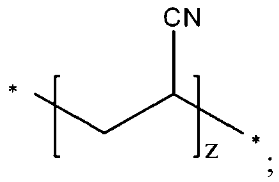

wherein, in the Chemical Formulae 1-1 and 1-2, m and z are each independently an integer from 1 to 100.

**4.** The electrode (10, 20) as claimed in any one of claims 1 to 3, wherein the first polymer comprises at least one of polyvinylalcohol (PVA), polyacrylonitrile (PAN), polyacrylic acid (PAA), polyethylene (PE), polyethylene glycol (PEG), polyimide (PI), polyacrylamide (PAM), polystyrene (PS), polyurethane (PU), polyvinylbutyral (PVB), polyvinylpyrrolidone (PVP), and a combination thereof.

**5.** The electrode (10, 20) as claimed in any one of claims 1 to 4, wherein the second polymer comprises:

a third structural unit represented by Chemical Formula 2-1A or Chemical Formula 2-1B, the third structural unit being derived from a (meth)acrylic acid-based monomer or a salt thereof;
a fourth structural unit represented by Chemical Formula 2-2, the fourth structural unit being derived from a (meth) acrylonitrile-based monomer; and
a fifth structural unit represented by Chemical Formula 2-3A or Chemical Formula 2-3B, the fifth structural unit being derived from a zwitterionic monomer,

Chemical Formula 2-1A:

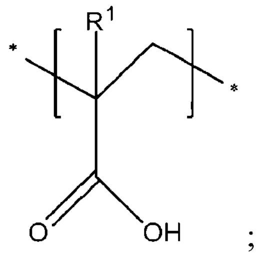

Chemical Formula 2-1B:

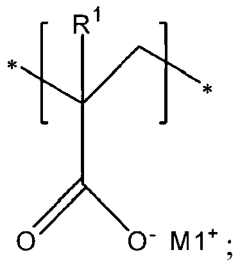

wherein, in the Chemical Formulae 2-1A and 2-1B,
$R^1$ are the same or different, and each independently comprise a hydrogen atom or a C1 to C20 alkyl group, and M1 comprises an alkali metal,

Chemical Formula 2-2:

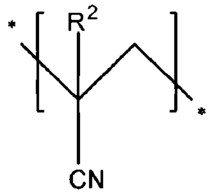
;

wherein, in the Chemical Formula 2-2, $R^2$ comprise a hydrogen atom or a C1 to C20 alkyl group,

Chemical Formula 2-3A:

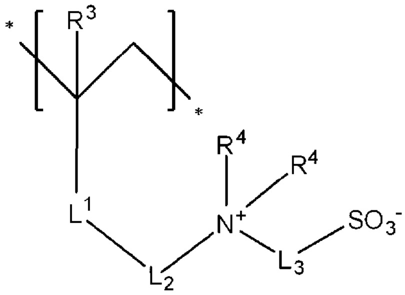
;

Chemical Formula 2-3B:

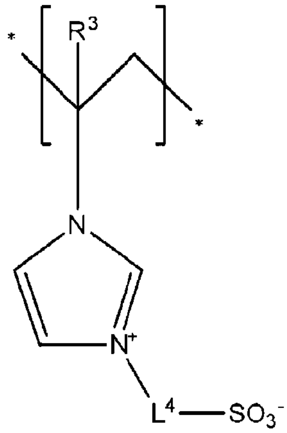
;

wherein, in the Chemical Formulae 2-3A and 2-3B,
$R^3$ are the same or different, and each independently comprise a hydrogen atom or a C1 to C20 alkyl group,
$R^4$ are the same or different, and each independently comprise a hydrogen atom or a C1 to C20 alkyl group,
$L^1$ comprises *- (C=O) -$NR^4$-$CH_2$-* or *- (C=O) - O - *, and
$L^2$ to $L^4$ each independently comprise a single bond, or a C1 to C20 alkylene group.

**6.** The electrode (10, 20) as claimed in claim 5,

wherein the second polymer further comprises a sixth structural unit represented by Chemical Formula 2-4A or Chemical Formula 2-4B, the sixth structural unit being derived from an alkylene glycol-based monomer or a salt thereof,

Chemical Formula 2-4A:

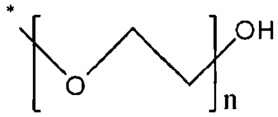

;

Chemical Formula 2-4B:

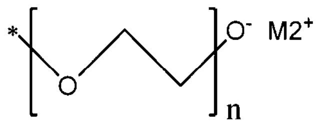

;

wherein, in the Chemical Formulae 2-4A and 2-4B, M2 comprises an alkali metal, and n is an integer from 1 to 100.

**7.** The electrode (10, 20) as claimed in any one of claims 1 to 6,

wherein a weight ratio of the first polymer ranges from about 40 wt% to about 80 wt% based on a total weight of the first composite conductive material;
wherein a weight ratio of the second polymer ranges from about 40 wt% to about 80 wt% based on a total weight of the second composite conductive material;
wherein an amount of the first composite conductive material in the first active material layer ranges from about 0.1 wt% to about 5 wt%; and/or
wherein an amount of the second composite conductive material in the second active material layer ranges from about 0.1 wt% to about 5 wt%.

**8.** The electrode (10, 20) as claimed in any one of claims 1 to 7,

wherein the first polymer is located within about 10 nm from the surface of the first carbon nanostructure, and/or wherein the second polymer is located within about 10 nm from a surface of the second carbon nanostructure.

**9.** The electrode (10, 20) as claimed in any one of claims 1 to 8, wherein at least one of the first and second carbon nanostructures comprises at least one of carbon nanotubes (CNTs), carbon nanofibers (CNFs), polyacetylene, graphene nanoribbons (GNRs), graphene sheets, fullerenes, nanodiamonds, mesoporous carbon, amorphous carbon, carbon quantum dots, nanoporous carbon, carbon black, nanohorns, and vitreous carbon.

**10.** The electrode (10, 20) as claimed in any one of claims 1 to 9,

wherein at least one of the first and second active materials is represented by Chemical Formula 3,

Chemical Formula 3: $Li_{x4}M^1_yM^2_zM^3_{1-y-z}O_{2-a}X_a$;

wherein, in the Chemical Formula 3,

$$0.5 \leq x4 \leq 1.8,\ 0 \leq a \leq 0.05,\ 0 < y \leq 1,\ 0 \leq z \leq 1,\ 0 \leq y+z \leq 1,$$

$M^1$, $M^2$ and $M^3$ each independently comprise at least one of Ni, Co, Mn, Al, B, Ba, Ca, Ce, Cr, Fe, Mo, Nb, Si, Sr, Mg, Ti, V, W, Zr, La, and a combination thereof, and
X comprises one or more of F, S, P, or Cl.

**11.** The electrode (10, 20) as claimed in any one of claims 1 to 10, wherein at least one of the first and second active material layers is substantially free of a binder.

**12.** A method of manufacturing an electrode (10, 20) for a rechargeable lithium battery, the method comprising:

forming a first active material layer on an electrode current collector; and
forming a second active material layer on the first active material layer,
wherein forming the first active material layer comprises forming a first active material and a first composite conductive material, and
wherein forming the second active material layer comprises forming a second active material and a second composite conductive material, and
wherein forming the first composite conductive material comprises:

introducing a first functional group onto a surface of the first carbon nanostructure; and
mixing the functionalized first carbon nanostructure with a first polymer to prepare a first mixture,

wherein forming the second composite conductive material comprises:

introducing a second functional group onto a surface of the second carbon nanostructure; and
mixing the functionalized second carbon nanostructure with a second polymer to prepare a second mixture,

wherein the first polymer is different from the second polymer, and
wherein an ionic conductivity of the second polymer is greater than an ionic conductivity of the first polymer.

**13.** The method as claimed in claim 12,

wherein forming the first composite conductive material further comprises stirring and heat-treating the first mixture, and/or
wherein forming the second composite conductive material further comprises stirring and heat treating the second mixture, and/or
wherein the first composite conductive material comprises the first carbon nanostructure, and the first polymer chemically bonded to the surface of the first carbon nanostructure, and/or
wherein the second composite conductive material comprises the second carbon nanostructure, and the second polymer chemically bonded to the surface of the second carbon nanostructure.

**14.** The method as claimed in any one of claims 12 to 13,
wherein one of introducing the first functional group onto the first carbon nanostructure and introducing the second functional group onto the second carbon nanostructure comprises at least one of a wet treatment using a strong acid, a plasma treatment, a dry treatment using vacuum ultraviolet irradiation, and a combination thereof.

**15.** A rechargeable lithium battery comprising:

a positive electrode;
a negative electrode;
a separator interposed between the positive electrode and the negative electrode; and
an electrolyte,
wherein at least one of the positive electrode and the negative electrode comprises the electrode as claimed in any of claims 1-11.

FIG. 1

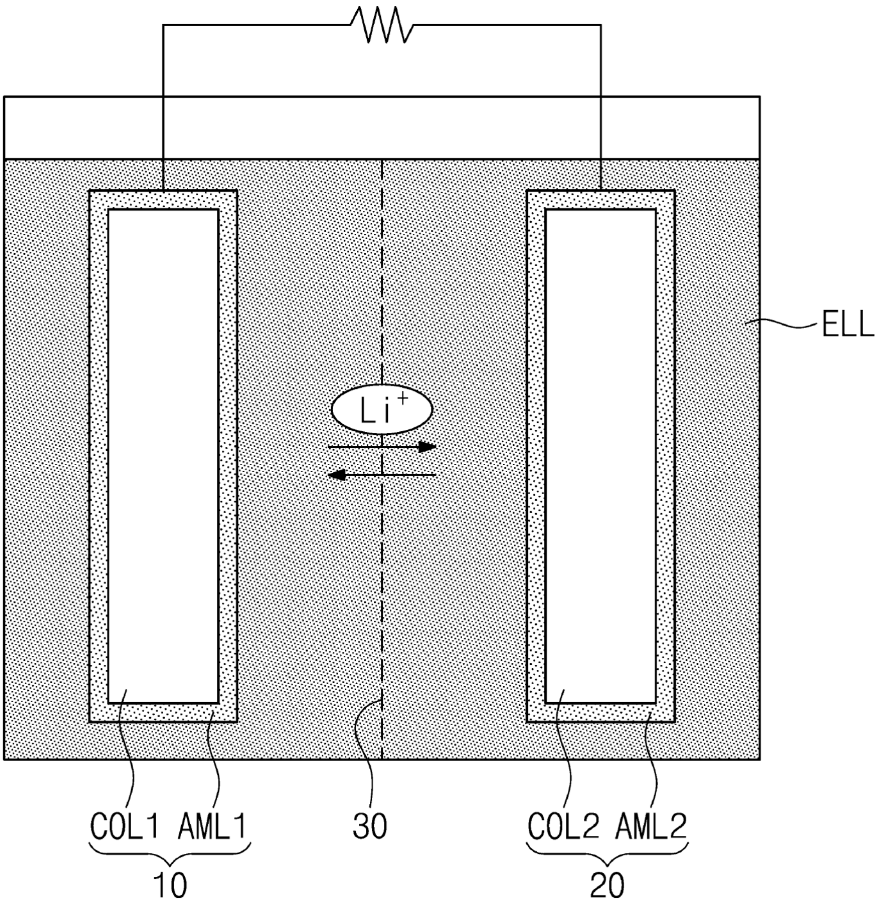

FIG. 2

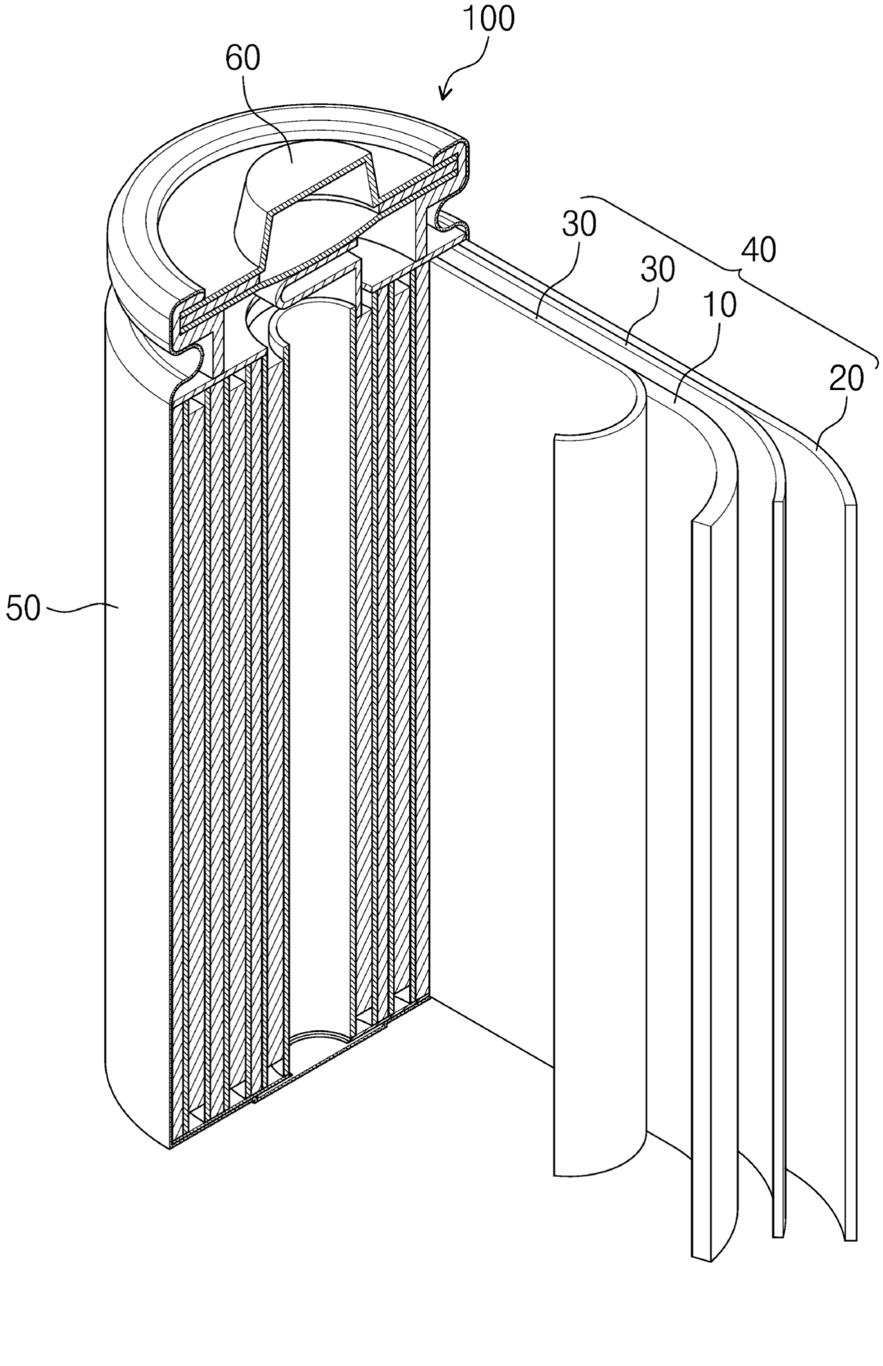

FIG. 3

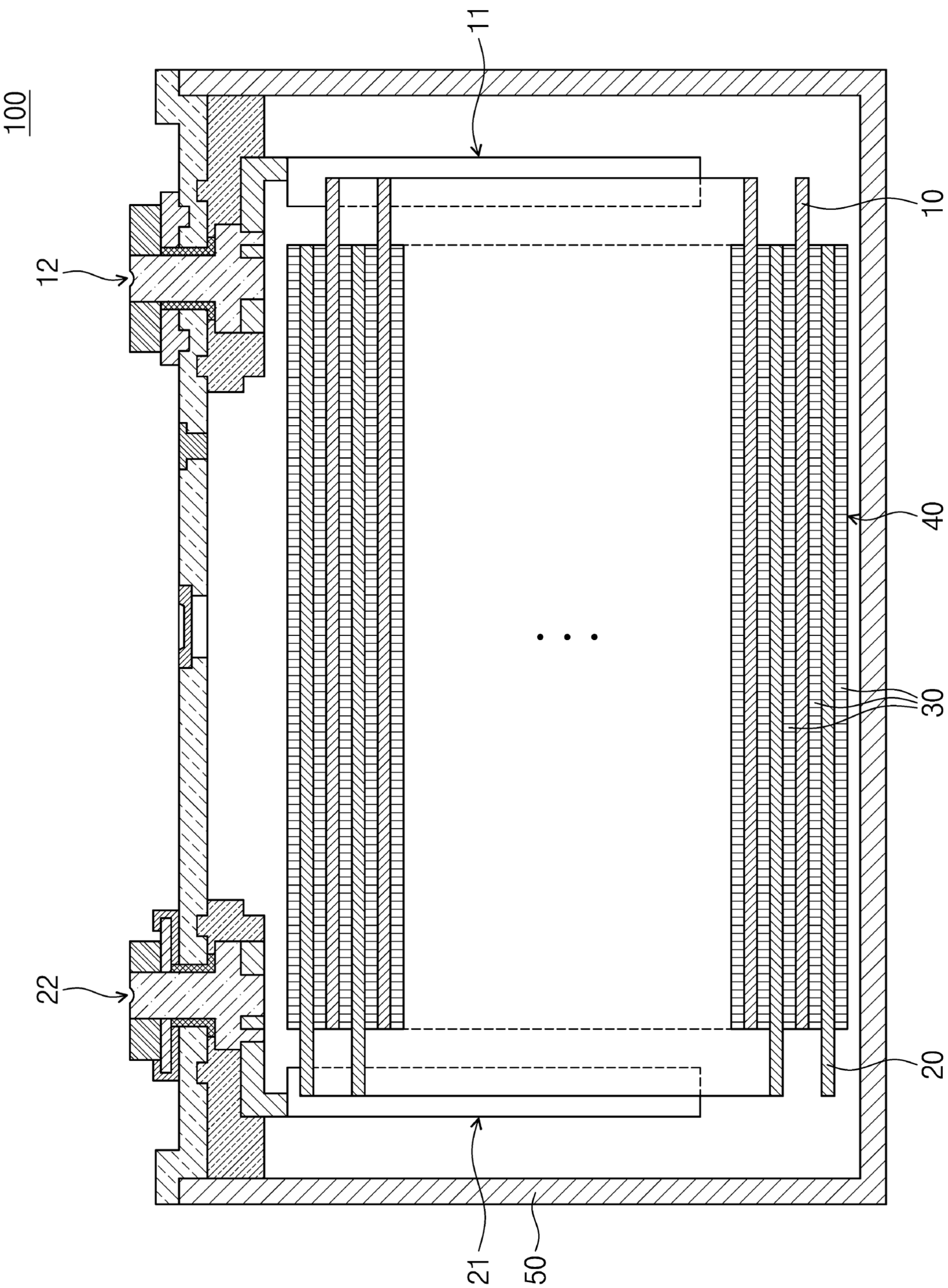

FIG. 4

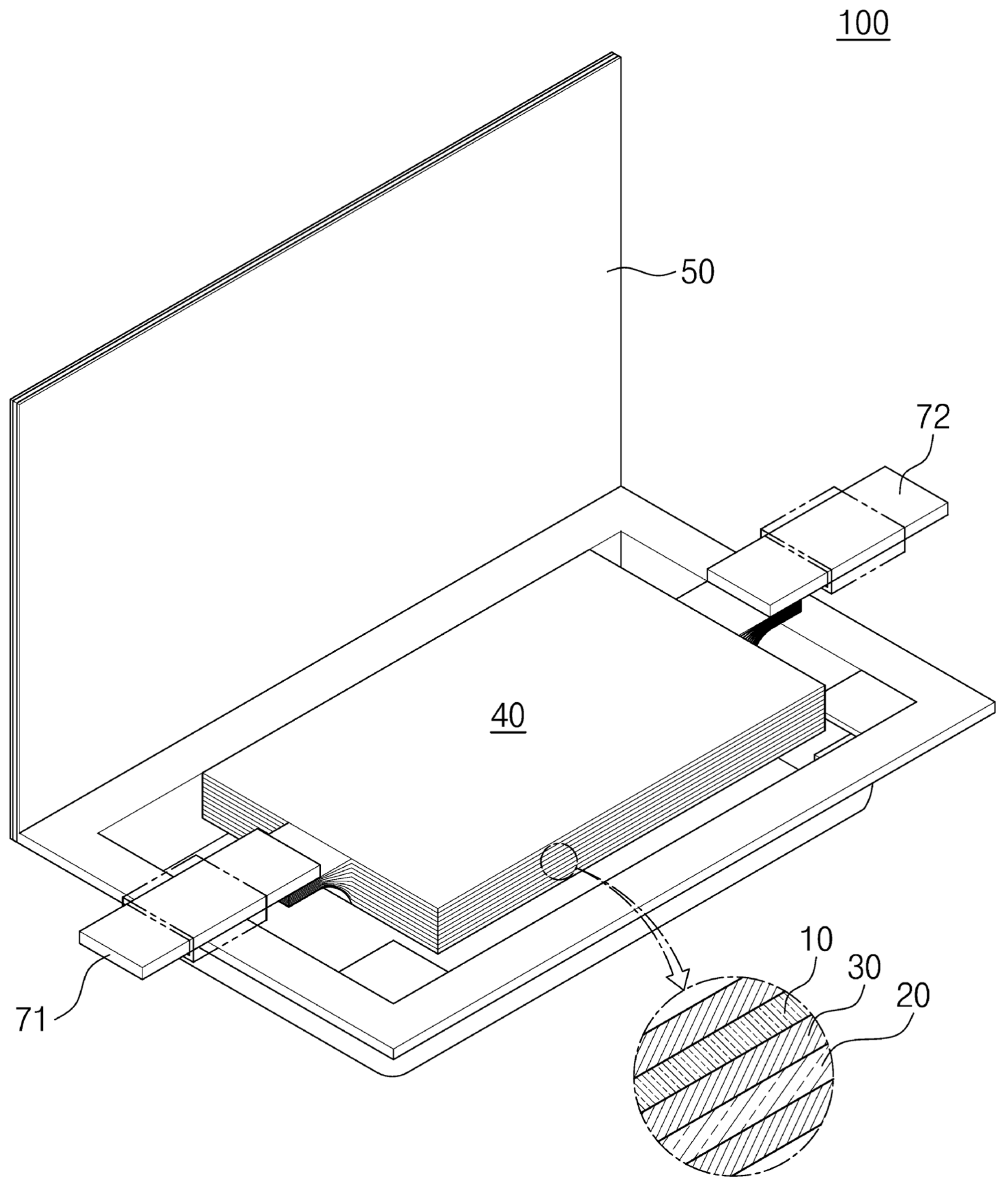

FIG. 5

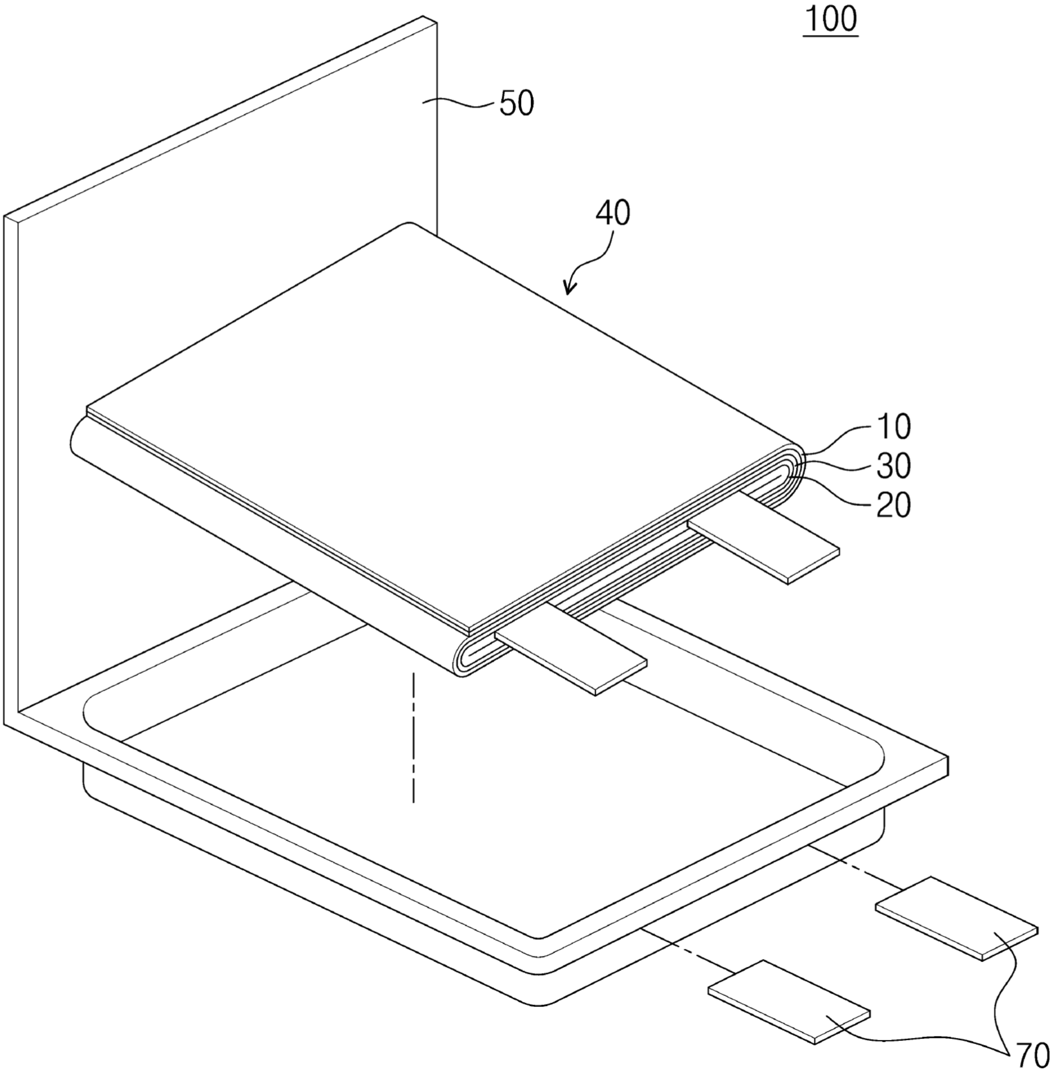

FIG. 6

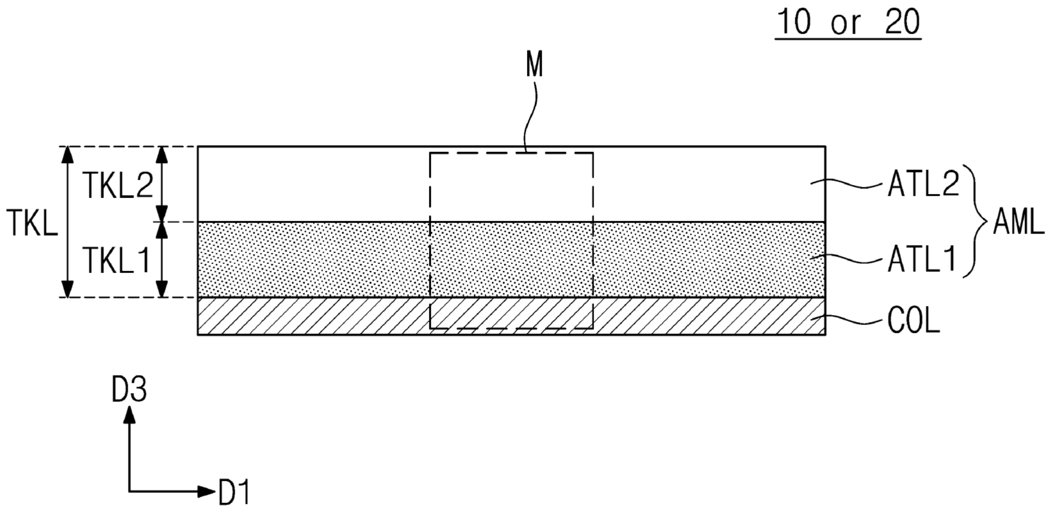

# FIG. 7

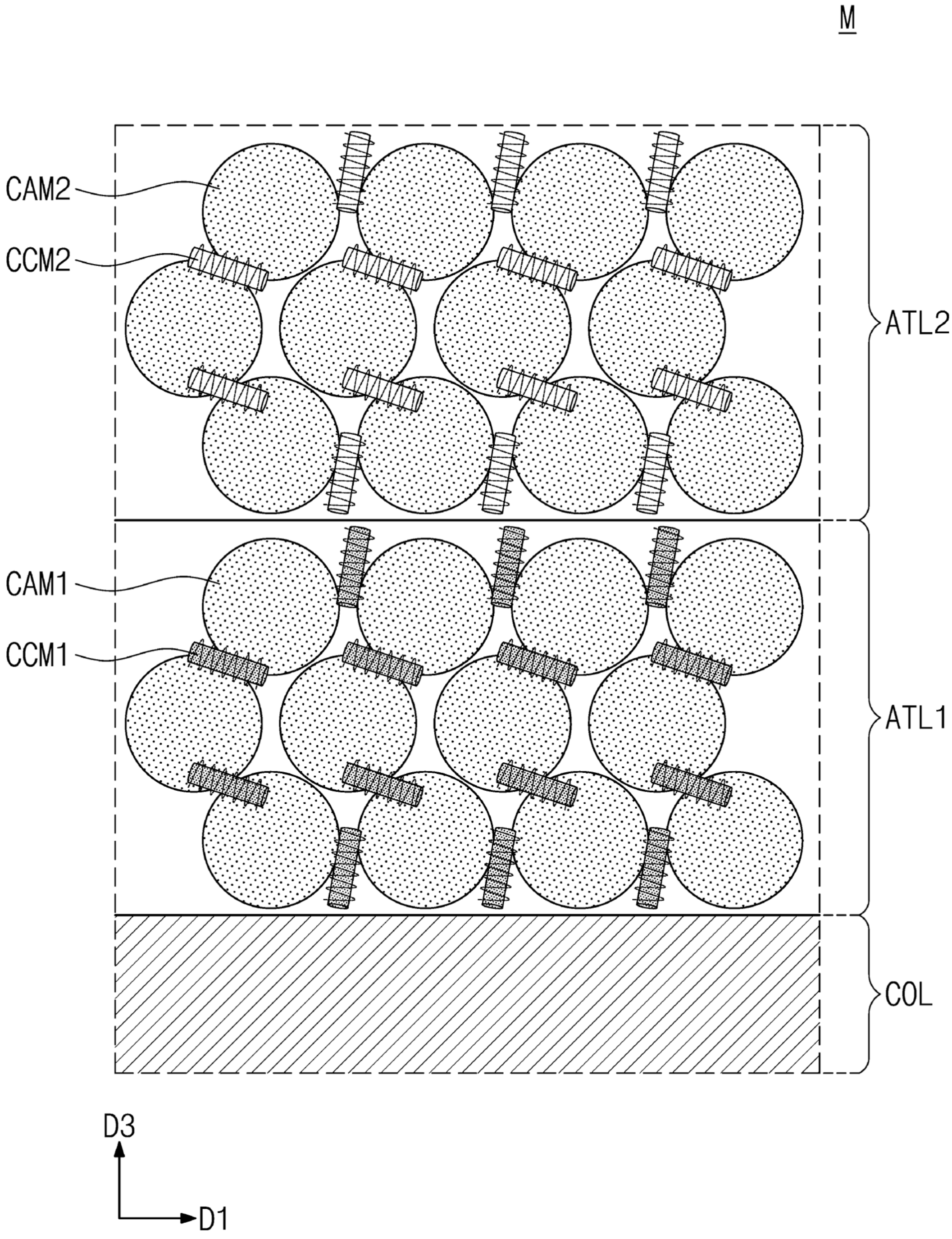

FIG. 8A

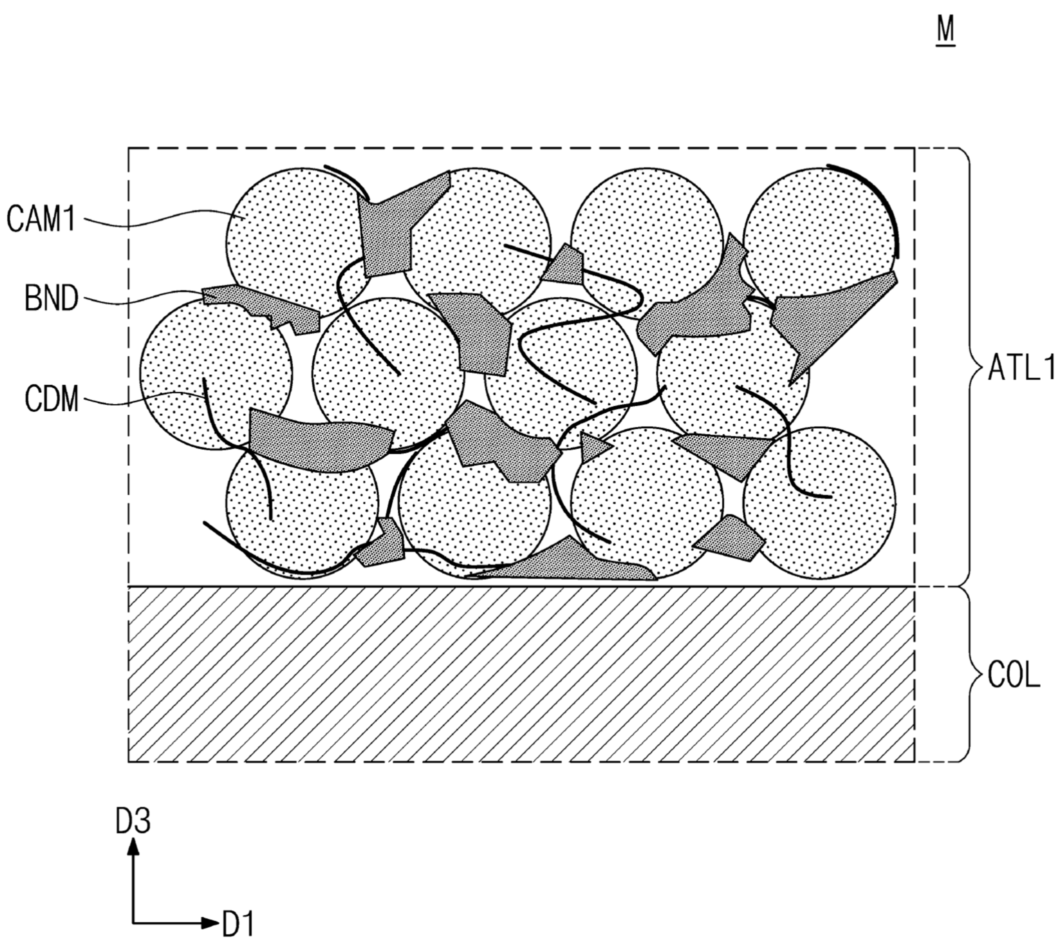

FIG. 8B

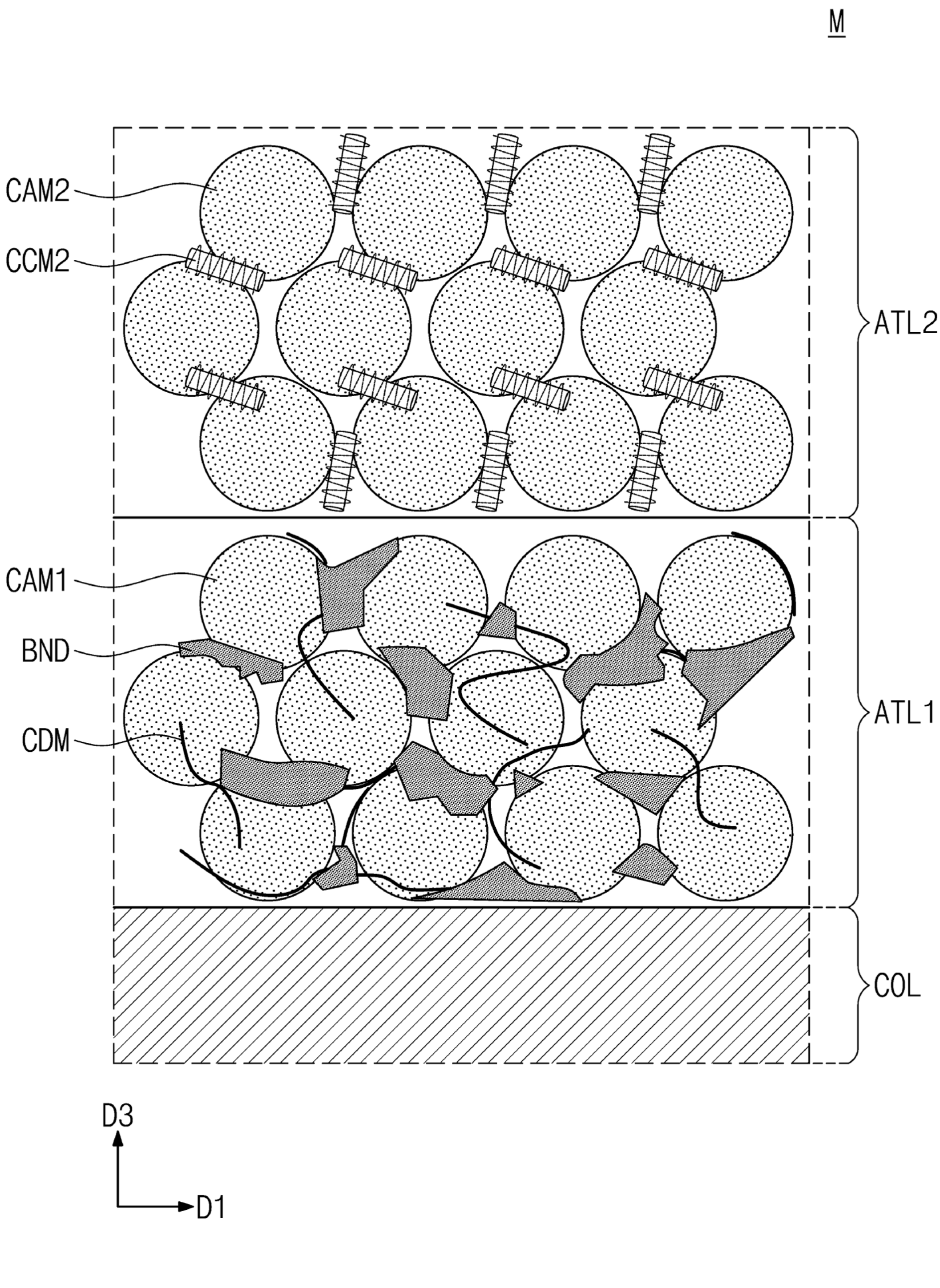

FIG. 8C

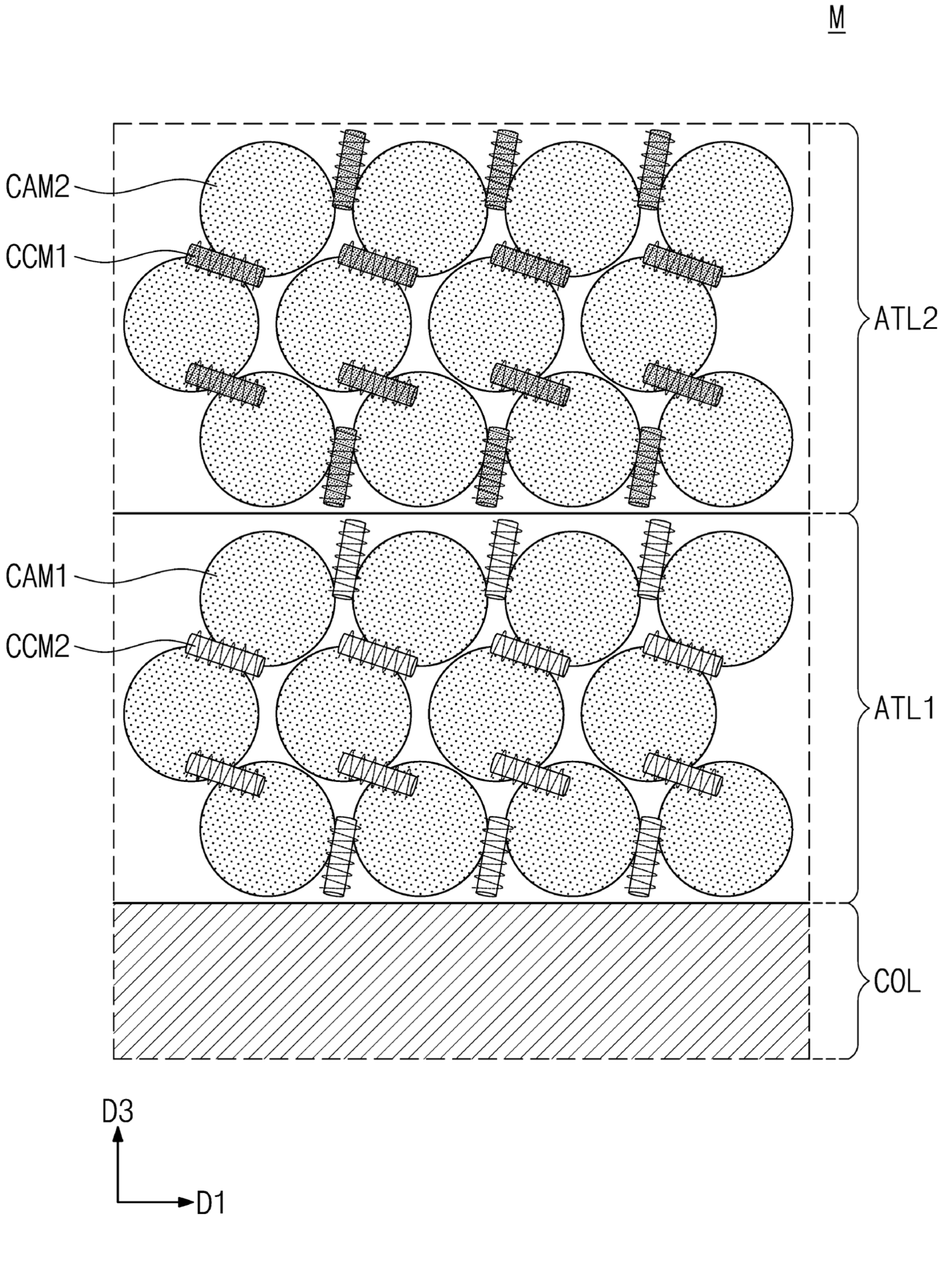

FIG. 9

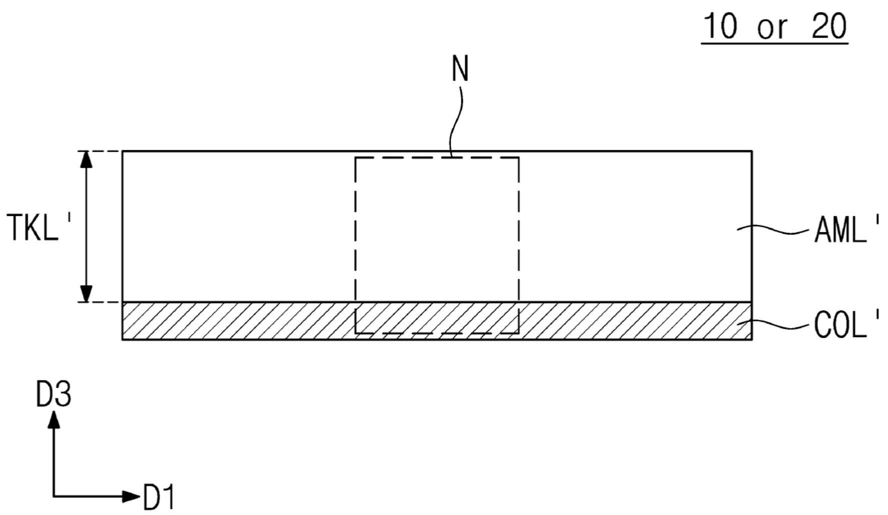

FIG. 10

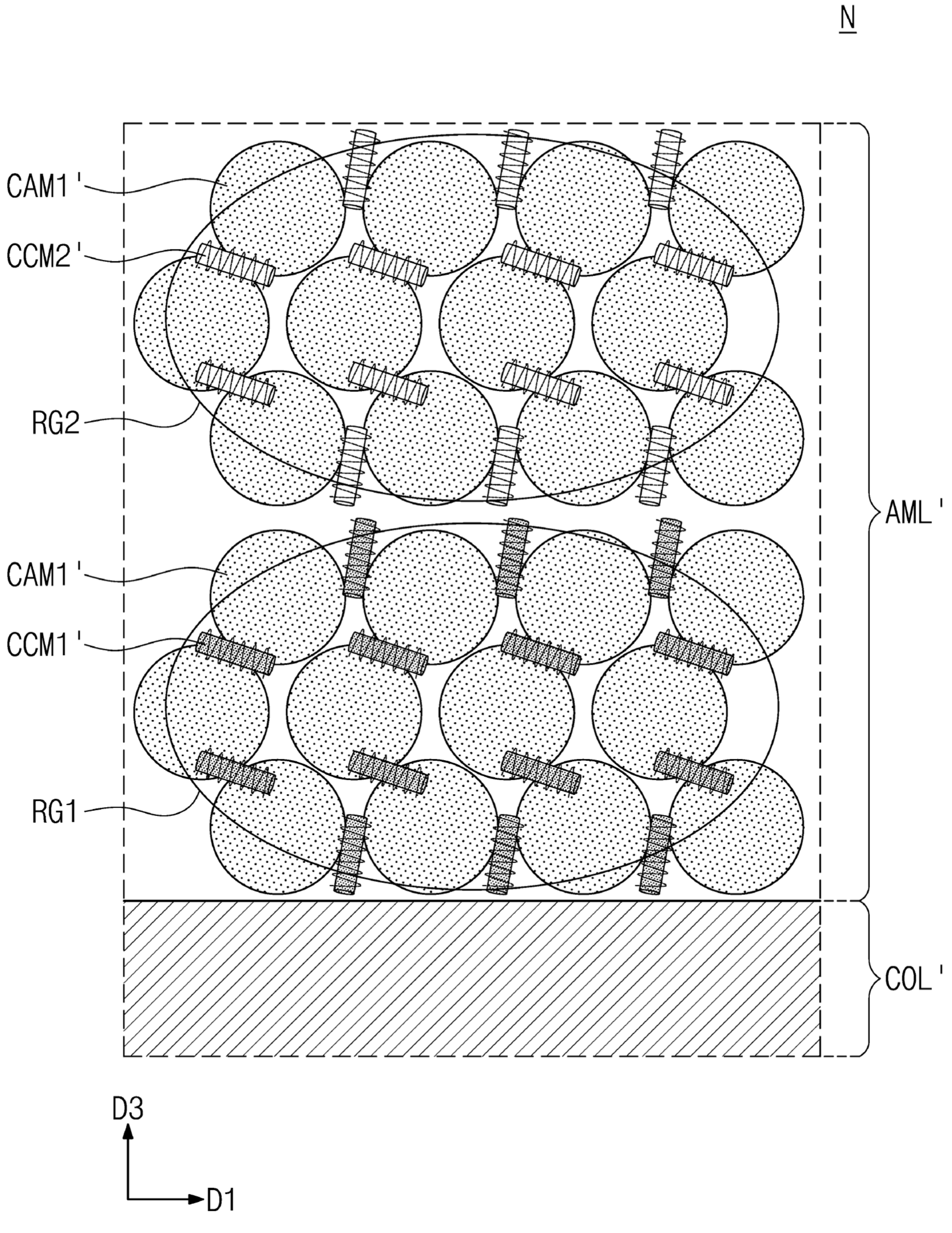

FIG. 11

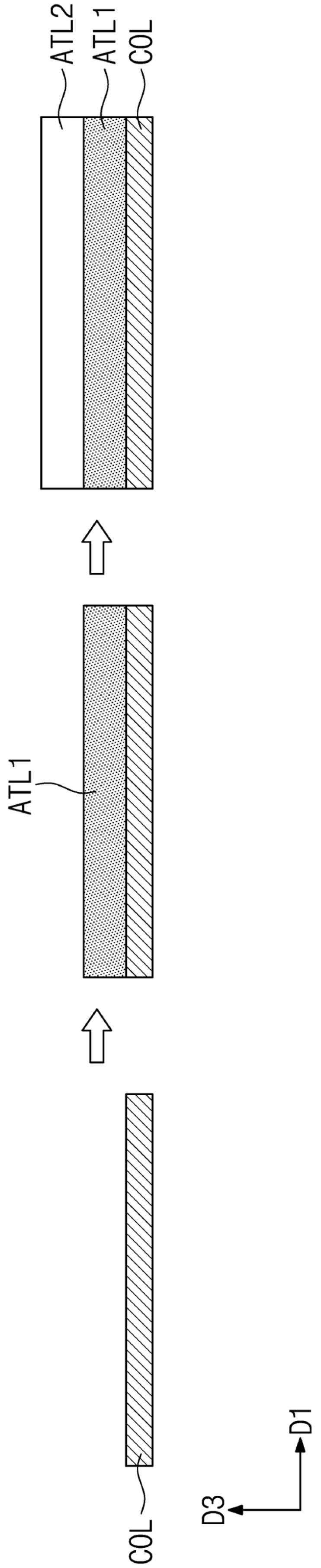

FIG. 12A

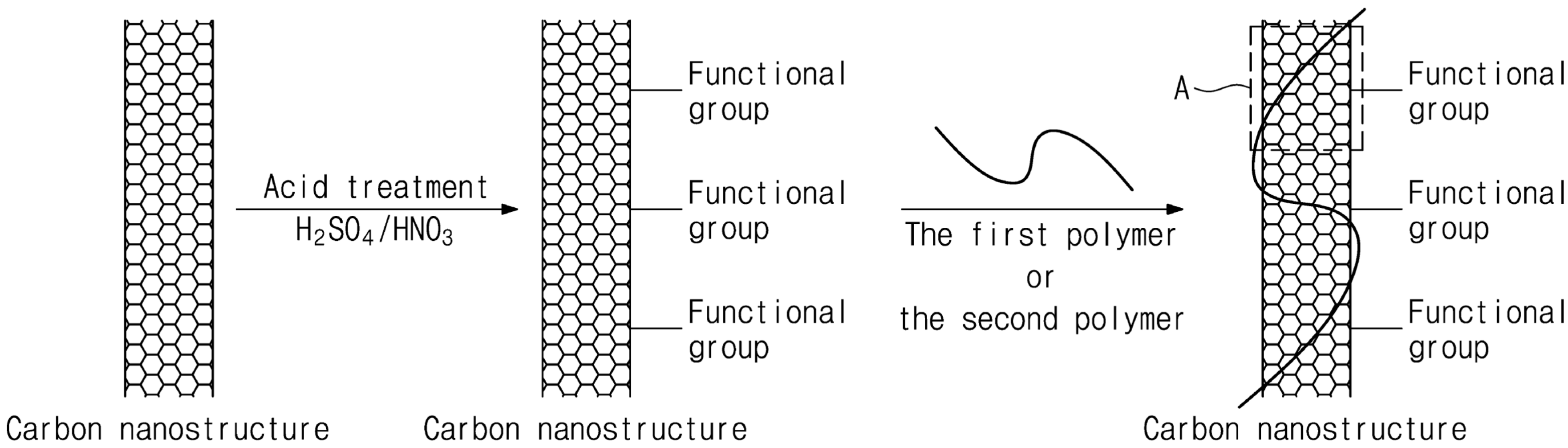

Acid treatment
$H_2SO_4/HNO_3$
The first polymer
or
the second polymer
A
Functional group
Functional group
Functional group
Functional group
Functional group
Functional group
Carbon nanostructure
Carbon nanostructure
Carbon nanostructure

FIG. 12B

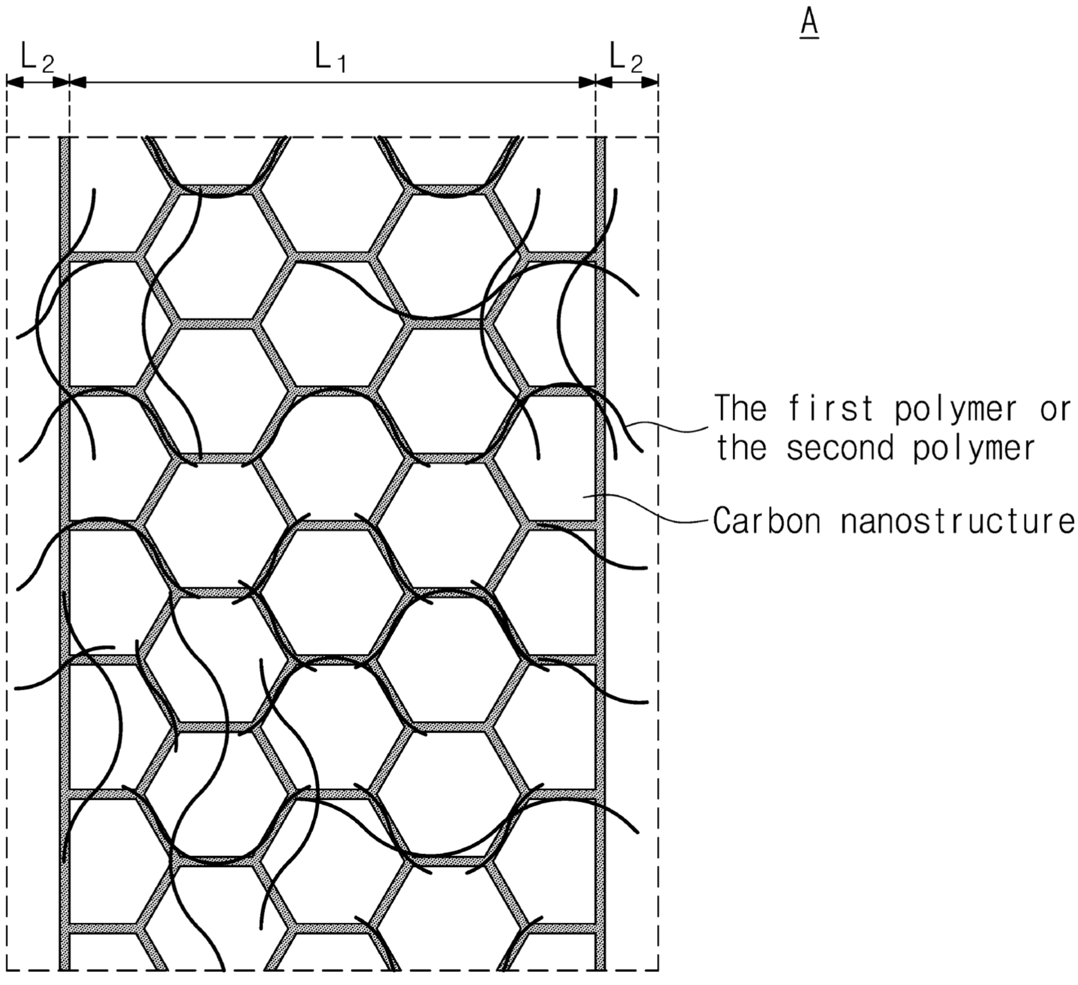
A
$L_2$
$L_1$
$L_2$
The first polymer or the second polymer
Carbon nanostructure

FIG. 13

[SE,x200,000]

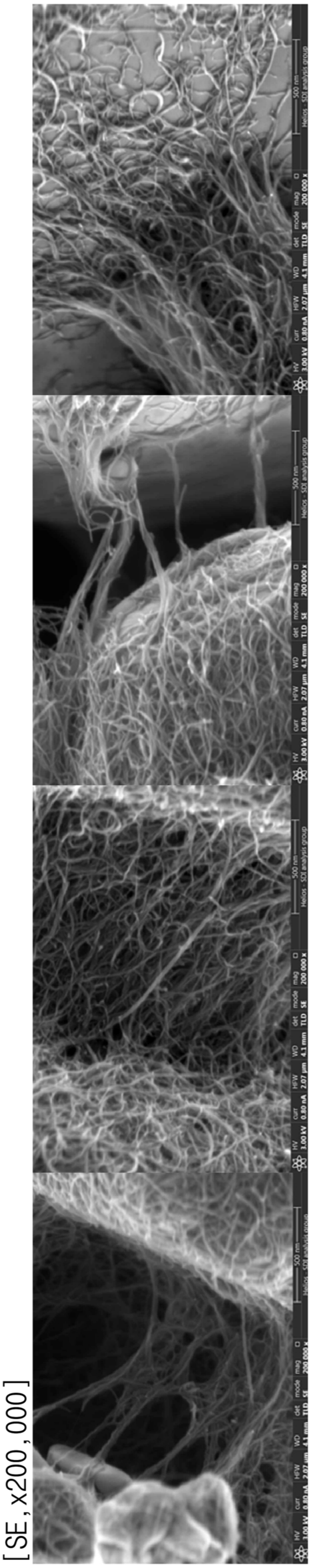

FIG. 14

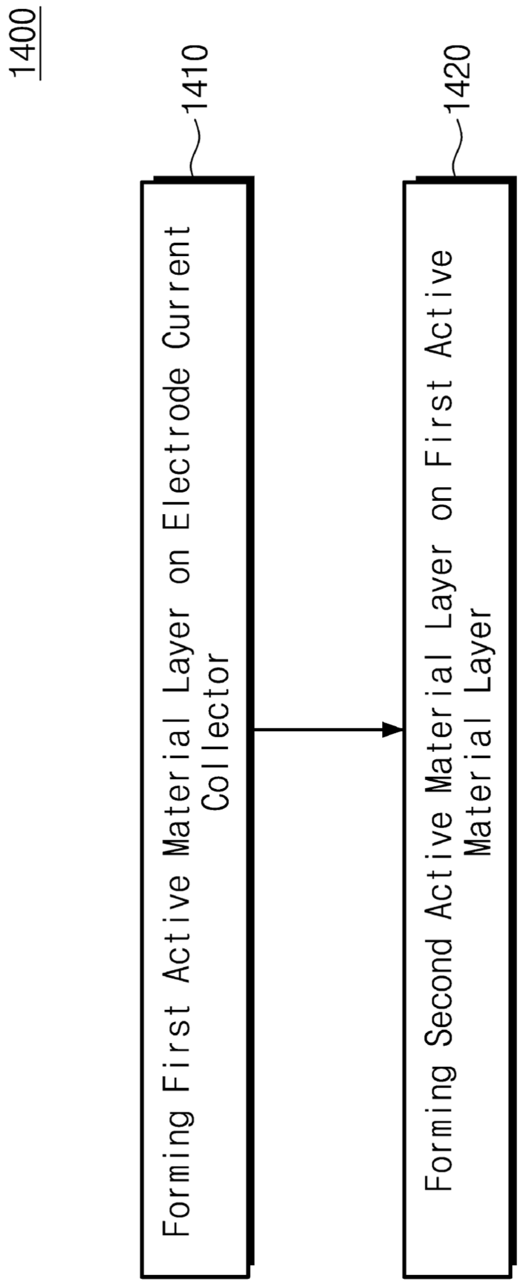
1400
1410
Forming First Active Material Layer on Electrode Current Collector
1420
Forming Second Active Material Layer on First Active Material Layer

Europäisches Patentamt
European Patent Office
Office européen des brevets

# EUROPEAN SEARCH REPORT

Application Number
EP 26 15 4296

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/091515 A1 (TAKEZAWA HIDEHARU [JP] ET AL) 19 March 2020 (2020-03-19) | 1-11,15 | INV. H01M4/131 H01M4/1391 H01M4/505 H01M4/62 H01M10/052 |
| A | * example 1 * | 12-14 | |
| | ----- | | |
| Y | WO 2024/080197 A1 (IDEMITSU KOSAN CO [JP]) 18 April 2024 (2024-04-18) * example 1 * | 1-11,15 | |
| | ----- | | |

TECHNICAL FIELDS SEARCHED (IPC)

H01M

The present search report has been drawn up for all claims

1

| Place of search | Date of completion of the search | Examiner |
|---|---|---|
| Munich | 27 May 2026 | Meini, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 26 15 4296

This annex lists the patent family members relating to the patent documents cited in the above-mentioned European search report. The members are as contained in the European Patent Office EDP file on
The European Patent Office is in no way liable for these particulars which are merely given for the purpose of information.

27-05-2026

| Patent document cited in search report | Publication date | Patent family member(s) | Publication date |
|---|---|---|---|
| US 2020091515 A1 | 19-03-2020 | CN 110603668 A | 20-12-2019 |
| | | JP 7142258 B2 | 27-09-2022 |
| | | JP WO2018221024 A1 | 02-04-2020 |
| | | US 2020091515 A1 | 19-03-2020 |
| | | WO 2018221024 A1 | 06-12-2018 |
| WO 2024080197 A1 | 18-04-2024 | CN 119998408 A | 13-05-2025 |
| | | EP 4603547 A1 | 20-08-2025 |
| | | JP WO2024080197 A1 | 18-04-2024 |
| | | KR 20250086615 A | 13-06-2025 |
| | | TW 202428767 A | 16-07-2024 |
| | | WO 2024080197 A1 | 18-04-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020250013727